(19) Europäisches Patentamt
European Patent Office
Office européen des brevets

(11) EP 4 715 514 A1

(12) EUROPEAN PATENT APPLICATION
published in accordance with Art. 153(4) EPC

(43) Date of publication:
25.03.2026 Bulletin 2026/13

(51) International Patent Classification (IPC):
G05D 23/19 (2006.01)    G05B 13/04 (2006.01)
G05B 13/02 (2006.01)

(21) Application number: 24839008.0

(22) Date of filing: 12.07.2024

(52) Cooperative Patent Classification (CPC):
G05D 23/1917; F24F 11/61; F24F 11/64;
G05B 13/027; G05B 13/04; G05D 23/19

(86) International application number:
PCT/IB2024/056792

(87) International publication number:
WO 2025/012866 (16.01.2025 Gazette 2025/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.07.2023  KR 20230091048
04.07.2024  KR 20240088189

(71) Applicant: Samsung Electronics Co., Ltd.
Suwon-si, Gyeonggi-do 16677 (KR)

(72) Inventor: HAHM, Seongil
Suwon-si Gyeonggi-do 16677 (KR)

(74) Representative: Appleyard Lees IP LLP
G Mill
Dean Clough Industrial Park
Halifax HX3 5AH (GB)

(54) ELECTRONIC DEVICE AND CONTROL METHOD THEREFOR

(57) Disclosed is an electronic apparatus. The electronic apparatus comprises: a memory storing at least one instruction; and at least one processor connected to the memory and configured to control the electronic apparatus, wherein, by executing the at least one instruction, the at least one processor is configured to obtain a temperature prediction value corresponding to each of a plurality of future time intervals based on a current time point, obtain weight information corresponding to the each future time interval based on error information between the obtained temperature prediction value and an actual temperature value, obtain an average predicted time point corresponding to the each future time interval based on the obtained weight information, obtain a gain value corresponding to the each future time interval based on the obtained average predicted time point and the error information, and perform temperature control based on an average predicted time point and an average predicted temperature corresponding to at least one future time interval, the at least one future time interval being identified based on the obtained gain value.

FIG. 3

# Description

[Technical Field]

The present disclosure relates to an electronic apparatus and a control method therefor, and more particularly, to an electronic apparatus for performing temperature control and a control method therefor.

[Background Art]

Advances in electronic technology have led to the development and proliferation of various types of electronic apparatuses. In particular, electronic apparatuses used in a variety of settings, including homes, offices, and public spaces, have been continuously advanced in recent years.

Recently, with the introduction of smart home technology, an automatic device control function has been advanced. For example, a product such as a refrigerator or an air conditioner is required to automatically control a current temperature to a set target temperature.

For example, for a refrigerator, a load (e.g., the amount and condition of food to be refrigerated or frozen) may vary if new food is put into or taken out of a cabinet of the refrigerator. Accordingly, the refrigerator may be required to perform corresponding temperature control. Alternatively, even if opening and closing a refrigerator door to check stored food, warm air from outside may be drawn into the cabinet although the load may remain constant. Accordingly, the refrigerator may thus be required to perform corresponding temperature control. For an air conditioner, a load may be determined by an indoor space size and the number of people present in an indoor space. Even if the same number of people is present therein, a load condition may vary if people exercise. Accordingly, the air conditioner may also be required to perform temperature control based on the amount and condition of the load.

[Disclosure of Invention]

[Solution to Problem]

In one or more embodiments, An electronic apparatus include a memory storing at least one instruction; and at least one processor connected to the memory and configured to control the electronic apparatus, wherein, by executing the at least one instruction, the at least one processor is configured to obtain a temperature prediction value corresponding to each of a plurality of future time intervals based on a current time point, obtain weight information corresponding to the each future time interval based on error information between the obtained temperature prediction value and an actual temperature value, obtain an average predicted time point corresponding to the each future time interval based on the obtained weight information, obtain a gain value corresponding to the each future time interval based on the obtained average predicted time point and the error information, and perform temperature control based on an average predicted time point and an average predicted temperature corresponding to at least one future time interval, the at least one future time interval being identified based on the obtained gain value.

In one or more embodiments, wherein, by executing the at least one instruction, the at least one processor may obtain a temperature prediction value corresponding to each of a plurality of future time points included in a specific future time interval among the plurality of future time intervals, obtain weight information corresponding to each of the plurality of future time points based on the error information between the obtained temperature prediction value and the actual temperature value, identify an average predicted time point corresponding to the specific future time interval based on the obtained weight information and identify the average predicted temperature corresponding to the average predicted time point, and obtain the gain value corresponding to the specific future time interval based on the obtained average predicted time point and the error information.

In one or more embodiments, wherein, by executing the at least one instruction, the at least one processor may obtain the weight information that is inversely proportional to a magnitude of the error information and proportional to a magnitude of a time difference between each of the plurality of future time points and the current time point.

In one or more embodiments, wherein, by executing the at least one instruction, the at least one processor may obtain a first temperature prediction value corresponding to each of a plurality of first future time points included in a first future time interval based on the current time point, obtain first weight information corresponding to each of the plurality of first future time points based on the error information corresponding to the obtained first temperature prediction value, identify a first average predicted time point based on the obtained first weight information and identify a first average predicted temperature corresponding to the first average predicted time point, obtain a second temperature prediction value corresponding to each of a plurality of second future time points included in a second future time interval based on the current time point, obtain second weight information corresponding to each of the plurality of second future time points based on the error information corresponding to the obtained second temperature prediction value, identify a second average predicted time point based on the obtained second weight information and identify a second average predicted temperature corresponding to the second average predicted time point, and perform the temperature control based on the first average predicted temperature corresponding to the first average predicted time point, or based on the second average predicted temperature corresponding to the second average predicted time point.

In one or more embodiments, wherein, by executing the at least one instruction, the at least one processor may obtain the temperature prediction values respectively corresponding to a plurality of future time points included in each of the plurality of future time intervals by using a plurality of neural network models respectively trained to predict temperatures corresponding to the plurality of future time intervals, obtain the weight information corresponding to the each future time interval based on the error information between the obtained temperature prediction value and the actual temperature value, obtain the average predicted time point corresponding to the each future time interval based on the obtained weight information, obtain a gain value corresponding to each of the plurality of neural network models based on the obtained average predicted time point and the error information, identify at least one of the plurality of neural network models based on the obtained gain value, and perform the temperature control based on the average predicted time point and the average predicted temperature predicted by using the identified at least one of the plurality of neural network models.

In one or more embodiments, wherein, by executing the at least one instruction, the at least one processor may obtain a plurality of first temperature prediction values respectively corresponding to different first future time points included in a first future time interval by using a first neural network model trained to predict a temperature corresponding to the first future time interval, obtain first error information corresponding to the first future time interval based on the error information between the obtained plurality of first temperature prediction values and the actual temperature value, obtain first weight information based on time information for the first future time interval and the first error information, obtain, based on the first weight information, a first average predicted temperature corresponding to the first neural network model and a first average predicted time point, obtain a first gain value corresponding to the first neural network model based on the first error information and the first average predicted time point, obtain a plurality of second temperature prediction values respectively corresponding to different second future time points included in a second future time interval by using a second neural network model trained to predict a temperature corresponding to the second future time interval, obtain second error information corresponding to the second future time interval based on the error information between the obtained plurality of second temperature prediction values and the actual temperature value, obtain second weight information based on time information for the second future time interval and the second error information, obtain, based on the second weight information, a second average predicted temperature corresponding to the second neural network model and a second average predicted time point, obtain a second gain value corresponding to the second neural network model based on the second error information and the second average predicted time point, identify a neural network model having a greater gain value between the first and second neural network models, and perform the temperature control based on the average predicted time point and the average predicted temperature predicted by using the identified neural network model.

In one or more embodiments, wherein, by executing the at least one instruction, the at least one processor may obtain a plurality of first weight information based on the different first future time points included in the first future time interval and the first error information, obtain the first average predicted temperature corresponding to the first neural network model and the first average predicted time point by applying the plurality of first weight information to the different first future time points and the plurality of first temperature prediction values, obtain a plurality of second weight information based on the different second future time points included in the second future time interval and the second error information, and obtain the second average predicted temperature corresponding to the second neural network model and the second average predicted time point by applying the second weight information to the different second future time points and the plurality of second temperature prediction values.

In one or more embodiments, wherein, by executing the at least one instruction, the at least one processor may obtain the temperature prediction values respectively corresponding to the plurality of future time points included in each of the plurality of future time intervals by inputting plurality of context information related to an operation of the electronic apparatus into the plurality of neural network models.

In one or more embodiments, wherein, by executing the at least one instruction, the at least one processor may perform the temperature control according to a first control logic based on the average predicted time point being less than a first threshold value and the average predicted temperature being less than a second threshold value, and perform the temperature control according to a second control logic based on the average predicted time point being greater than or equal to the first threshold value and the average predicted temperature being greater than or equal to the second threshold value.

In one or more embodiments, wherein the electronic apparatus includes at least one of a refrigeration device, a freezer device, or an air conditioning device operating based on a predetermined temperature control cycle.

In one or more embodiments, a control method for an electronic apparatus, the method comprises obtaining a temperature prediction value corresponding to each of a plurality of future time intervals based on a current time point, obtaining weight information corresponding to the each future time interval based on error information between the obtained temperature prediction value and an actual temperature value, obtaining an average predicted time point corresponding to the each future time interval based on the obtained weight information, obtaining a gain value corresponding to the each future time interval based on the obtained average predicted time point and the error information, and performing temperature control based on an average predicted time point and an average predicted temperature corresponding to at least one future time interval, the at least one future time interval being identified based on the obtained gain value.

In one or more embodiments, a non-transitory computer-readable medium storing computer instructions that cause an electronic apparatus to perform an operation if executed by a processor of the electronic apparatus, wherein the operation includes obtaining a temperature prediction value corresponding to each of a plurality of future time intervals based on a current time point, obtaining weight information corresponding to the each future time interval based on error information between the obtained temperature prediction value and an actual temperature value, obtaining an average predicted time point corresponding to the each future time interval based on the obtained weight information, obtaining a gain value corresponding to the each future time interval based on the obtained average predicted time point and the error information, and performing temperature control based on an average predicted time point and an average predicted temperature corresponding to at least one future time interval, the at least one future time interval being identified based on the obtained gain value.

[Brief Description of Drawings]

FIG. 1 is a diagram illustrating an implementation example of an electronic apparatus according to an embodiment of the present disclosure.
FIG. 2A is a block diagram illustrating a configuration of the electronic apparatus according to an embodiment.
FIG. 2B is a block diagram illustrating a specific configuration of the electronic apparatus according to an embodiment.
FIG. 3 is a flowchart illustrating a control method for an electronic apparatus according to at least one embodiment.
FIG. 4 is a flowchart illustrating a control method for an electronic apparatus according to at least one embodiment.
FIG. 5 is a diagram illustrating a method for predicting a temperature at a future time point according to at least one embodiment.
FIG. 6 is a diagram illustrating a method for predicting a temperature by using a neural network model according to at least one embodiment.

FIG. 7 is a diagram illustrating a specific method for predicting a temperature by using a neural network model according to at least one embodiment.
FIG. 8 is a diagram illustrating an operation of the neural network model according to at least one embodiment.
FIG. 9 is a diagram illustrating a method for calculating error information according to at least one embodiment.
FIG. 10 is a flowchart illustrating a method for selecting control logic according to at least one embodiment.
FIG. 11 is a block diagram illustrating a configuration of an electronic apparatus according to at least one embodiment.

[Mode for Invention]

Terms used in the specification are briefly described, and the present disclosure is then described in detail.

General terms that are currently widely used are selected as terms used in embodiments of the present disclosure in consideration of their functions in the present disclosure, and may be changed based on the intention of those skilled in the art or a judicial precedent, the emergence of a new technique, or the like. In addition, in a specific case, terms arbitrarily chosen by an applicant may exist. In this case, the meanings of such terms are mentioned in detail in corresponding descriptions of the present disclosure. Therefore, the terms used in the present disclosure need to be defined based on the meanings of the terms and the contents throughout the present disclosure rather than simple names of the terms.

In the specification, the expression such as "have", "may have", "include", or "may include", indicates the presence of a corresponding feature (for example, a numerical value, a function, an operation, or a component such as a part), and does not exclude the presence of an additional feature.

In the present disclosure, the expression such as "A or B", "least one of A and/or B", or "one or more of A and/or B" may include all possible combinations of items enumerated together. For example, "A or B", "at least one of A and B", or "at least one of A or B" may indicate all of 1) a case in which at least one A is included, 2) a case in which at least one B is included, or 3) a case in which both of at least one A and at least one B are included.

The expressions such as "first" and "second", used in the specification, may indicate various components regardless of the sequence and/or importance of the components. These expressions are only used to distinguish one component and another component from each other, and do not limit the corresponding components.

If any component (for example, a first component) is mentioned to be "(operatively or communicatively) coupled with/to" or "connected to" another component (for example, a second component), it should be understood that the any component is directly coupled to another component or may be coupled to another component through yet another component (for example, a third component).

An expression such as "configured (or set) to", used in the present disclosure, may be replaced by an expression such as "suitable for", "having the capacity to", "designed to", "adapted to", "made to", or "capable of', depending on a context. The expression "configured (or set) to" does not necessarily indicate "specifically designed to" in terms of hardware.

The expression "a device configured to", in any context, may indicate that the device may "perform~" together with another device or component. For example, a "processor configured (or set) to perform A, B, and C" may indicate a dedicated processor (for example, an embedded processor) that may perform the corresponding operations or a generic-purpose processor (for example, a central processing unit (CPU) or an application processor) that may perform the corresponding operations by executing one or more software programs stored in a memory device.

A term of a singular number may include its plural number unless explicitly indicated otherwise in the context. It should be understood that a term "include" or "formed of' used in this application specifies the presence of features, numerals, steps, operations, components, parts, or combinations thereof, which are mentioned in the specification, and does not preclude the presence or addition of one or more other features, numerals, steps, operations, components, parts, or combinations thereof.

In the present disclosure, a "module" or a "~er/~or" may perform at least one function or operation, and be implemented by hardware, software, or a combination of hardware and software. In addition, a plurality of "modules" or a plurality of "~ers/~ors" may be integrated in at least one module and be implemented by at least one processor 130 except for a "module" or a "~er/or" that needs to be implemented by a specific hardware.

Meanwhile, the various elements and areas in the drawings are schematically shown. Therefore, the spirit of the present disclosure is not limited by relative sizes or intervals shown in the accompanying drawings.

Hereinafter, an embodiment of the present disclosure is described in detail with reference to the accompanying drawings.

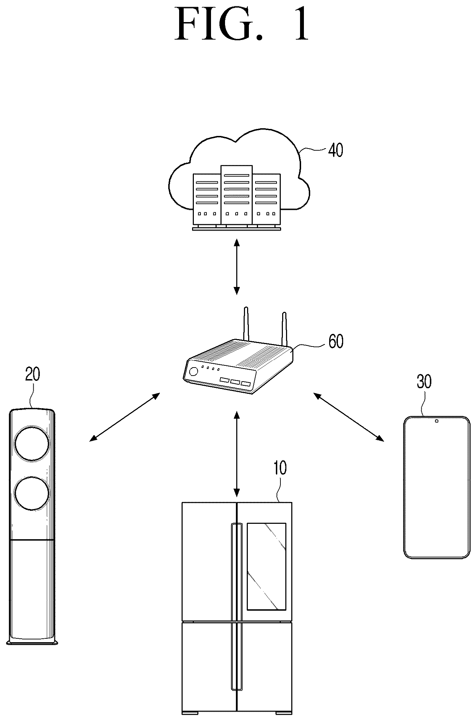

FIG. 1 is a diagram illustrating an implementation example of an electronic apparatus according to an embodiment of the present disclosure.

FIG. 1 is a diagram illustrating an operation of an electronic system according to an embodiment.

Referring to FIG. 1, the electronic system may include a plurality of devices 10 and 20, a user terminal 30, a server 40, and an access point (AP) device 65.

The plurality of devices 10 and 20 may refer to various internet of things (IoT) devices capable of being controlled by using an application installed on the user terminal 30. For example, the plurality of devices 10 and 20 may be implemented as various home appliances such as refrigerators, air conditioners, televisions (TVs), air purifiers, washing machines, dryers, or ovens. For example, the plurality of devices 10 and 20 may also refer to internet of things (IoT) devices that support a wireless fidelity (Wi-Fi) module. The Wi-Fi module may include a Wi-Fi firmware and a Wi-Fi driver that enables an operating system of an electronic apparatus 100 to recognize the Wi-Fi firmware. Here, the Wi-Fi firmware (or a wireless local area network (LAN) card) may be installed as a hardware module within each of the plurality of devices 10 and 20, or may be installed in each of the plurality of devices 10 and 20 by using an interface (e.g., a universal serial bus (USB)). For example, the Wi-Fi firmware may be implemented in at least one of a peripheral component interconnection (PCI), a PCI-express, a personal computer memory card international association (PCMCIA), or a USB.

The user terminal 30 may download and install an application from the server providing the application. For example, the application may be an IoT application for registering and managing the plurality of devices 10 and 20 on the server 40. The application may refer to software that a user directly uses on the OS, and may be provided as an icon interface on a screen of the user terminal 30. In this case, the user may execute the application (hereinafter, the IoT application) on the user terminal 30, input a user account, and log in to the server 40 by using the input user account, and the user terminal 30 may communicate with the server 40 based on the logged-in user account.

Server 40 may manage the plurality of devices 10 and 20 registered to the user account. Here, the server 40 may be implemented as a cloud server, and is not limited thereto.

However, the above-described embodiment is not limited to showing an example of a smart home system.

For example, the plurality of devices 10 and 20 may be implemented as refrigerators, air conditioners, or the like that require temperature control.

A refrigerator according to an embodiment may include a body. The "body" may include an inner case, an outer case disposed on an exterior of the inner case, and an insulation disposed between the inner cases and the outer case. The "inner case" may include at least one of a case, a plate, a panel, or a liner configuring a storage compartment. The inner case may be formed as a single body or by assembling a plurality of plates. The "outer case" may form an exterior of the body and be coupled to the exterior of the inner case to allow the insulation to be disposed between the inner case and the outer case. The "insulation" may insulate an inside of the store compartment and an outside of the store compartment to maintain a temperature inside the store compartment at a set appropriate temperature without being affected by an environment outside the store compartment. According to at least one embodiment, the insulation may include foam insulation. The foam insulation may be formed by injecting and foaming a urethane foam, in which polyurethane and a foaming agent are mixed, between the inner case and the outer case.

According to at least one embodiment, the insulation may include vacuum insulation in addition to the foam insulation, or include only the vacuum insulation instead of the foam insulation. The vacuum insulation may include a core material and an outer covering material that accommodates the core material and seals an interior under a vacuum or near-vacuum pressure. However, the insulation is not limited to the above-described foam insulation or vacuum insulation, and may include various materials that may be used for insulation.

"The storage compartment" may include a space defined by the inner case. The storage compartment may further include the inner case defining a space corresponding to the storage compartment. The storage compartment may store various items such as food, medicine, and cosmetics, and be formed to have at least one side open for inserting and taking out items.

The refrigerator may include one or more storage compartments. If the refrigerator includes two or more storage compartments, each storage compartment may have a different purpose and be maintained at a different temperature. To this end, each storage compartment may be separated from each other by a partition including the insulation.

The storage compartment may be maintained at an appropriate temperature range based on its purpose, and may include a "refrigerator compartment", a "freezer compartment", or a "variable temperature compartment", distinguished based on its purpose and/or temperature range. The refrigerator compartment may be maintained at a temperature appropriate for refrigerating an item, and the freezer compartment may be maintained at a temperature appropriate for freezing an item. "Refrigerating" may refer to cooling an item to be cold without freezing the item, and for example, the refrigerator compartment may be maintained at a temperature ranging from 0 degrees Celsius to +7 degrees Celsius. "Freezing" may refer to cooling an item to freeze or to be maintained in a frozen state, and for example, the freezer compartment may be maintained at a temperature ranging from -20 degrees Celsius to -1 degree Celsius. The variable temperature compartment may be used as either the refrigerator compartment or the freezer compartment, according to or regardless of a user selection.

The storage compartment may be referred to by various terms such as "the refrigerator compartment", "the freezer compartment", and "the variable temperature compartment", as well as a "vegetable compartment", a "fresh compartment", a "cooling compartment", an "ice compartment", and the like. The terms "the refrigerator compartment", "the freezer compartment", and "the variable temperature compartment" used hereinafter should be understood to encompass the storage compartments each having a corresponding purpose and temperature range.

According to at least one embodiment, the refrigerator may include at least one door to open and close an open side of the storage compartment. The door may open and close each of one or more storage compartments. Alternatively, a single door may open and close the plurality of storage compartments. The door may be installed on a front surface of the body in a pivotal or sliding manner.

The "door" may seal the storage compartment if the door is closed. The door may include insulation, similar to the body, to insulate the storage compartment if the door is closed.

According to at least one embodiment, the door may include a door outer panel forming the front surface of the door, a door inner panel forming a rear surface of the door and facing the storage compartment, an upper cap, a lower cap, and door insulation disposed inside these components.

The door inner panel may include a gasket formed around its edge and sealing the storage compartment by coming into close contact with the front surface of the body if the door is closed. The door inner panel may include a projection that protrudes rearward to accommodate a door basket for storing an item.

According to at least one embodiment, the door may include a door body and a front panel detachably coupled to a front surface of the door body and forming a front surface of the door. The door body may include the door outer panel forming a front surface of the door body, the door inner panel forming a rear surface of the door body and facing the storage compartment, the upper cap, the lower cap, and the door insulation disposed inside these components.

The refrigerator may be classified into a French door type, a side-by-side type, a bottom mounted freezer (BMF), a top mounted freezer (TMF), a door refrigerator, or the like based on the arrangement of the door and the storage compartment.

According to at least one embodiment, the refrigerator may include a cold air supply device for supplying cold air to the storage compartment. The "cold air supply device" may include a machine, a device, an electronic apparatus, and/or a system combining these components to generate cold air and guide cold air to cool the storage compartment.

According to at least one embodiment, the cold air supply device may generate cold air based on a refrigeration cycle, which includes processes of compression, condensation, expansion, and evaporation of a refrigerant. To this end, the cold air supply device may include a refrigeration cycle device that includes a compressor, a condenser, an expansion device, and an evaporator, and that is capable of driving the refrigeration cycle. According to at least one embodiment, the cold air supply device may include a semiconductor, such as a thermoelectric element. The thermoelectric element may cool the storage compartment by heating and cooling based on the Peltier effect.

According to at least one embodiment, the refrigerator may include a mechanical room in which at least some components belonging to the cold air supply device are disposed.

The "mechanical room" may be separated and insulated from the storage compartment to prevent heat occurring in the component disposed in the mechanical room from being transferred to the storage compartment. An interior of the mechanical room may communicate with the exterior of the body to dissipate heat occurring in the parts disposed in the mechanical room.

According to at least one embodiment, the refrigerator may include a dispenser disposed on the door to provide water and/or ice. The dispenser may be disposed on the door to enable the user to access the dispenser without opening the door.

According to at least one embodiment, the refrigerator may include an ice-making device for producing ice. The ice-making device may include an ice-making tray that stores water, an ice-separating device that separates ice from the ice-making tray, and an ice bucket that stores ice produced in the ice-making tray.

A refrigerator (or an air conditioner) may require time to raise or lower a temperature. For example, it is assumed that a temperature in the refrigerator compartment increases as newly purchased room-temperature food is put therein. A temperature prediction algorithm may detect this event and predict the temperature increase. To lower the above-described temperature again, the control algorithm is required to activate a motor in advance and drive the compressor to compress the refrigerant, and distribute the compressed refrigerant to a vicinity of the compartment. This entire process may require at least several minutes to tens of minutes. For convenience, the corresponding time is referred to as a control cycle duration. However, if the user takes out the food again or puts in more food during the corresponding time, i.e., as a condition changes in real time, an error may increase upon predicting a temperature at a far future time point (e.g., a temperature after fifteen minutes). On the other hand, the error may decrease upon predicting a temperature at a very near future time point (e.g., a temperature after one minute). However, effectiveness, that is, an amount of energy savings obtainable through prediction-based control, may be reduced or may not exist. In a situation where a duration of the control cycle is at least several minutes to tens of minutes, it may be meaningless to control the motor and the compressor based on a temperature prediction value obtained one minute after.

Accordingly, hereinafter, the following description describes various embodiments for predicting a temperature corresponding to a future interval, optimally controlling the motor and the compressor based on the predicted temperature, and responding adaptively in real time to a load that varies at a period shorter than the control cycle duration, thereby increasing prediction accuracy.

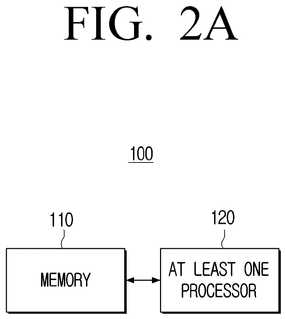

FIG. 2A is a block diagram illustrating a configuration of the electronic apparatus according to an embodiment.

Referring to FIG. 2A, the electronic apparatus 100 may include a memory 110 and at least one processor 120.

According to at least one embodiment, the electronic apparatus 100 may include at least one of a refrigeration device, a freezer device, or an air conditioning device operated based on a predetermined temperature control cycle as described with reference to FIG. 1.

The memory 110 may store data required for the various embodiments. The memory 110 may be implemented as a memory embedded in an electronic apparatus 100' or as a memory detachable from the electronic apparatus 100, depending on a data storage purpose. For example, data for operating the electronic apparatus 100 may be stored in the memory embedded in the electronic apparatus 100', and data for expanding functions of the electronic apparatus 100 may be stored in the memory detachable from the electronic apparatus 100. Meanwhile, the memory embedded in the electronic apparatus 100 may be implemented as at least one of a volatile memory (e.g., a dynamic RAM (DRAM)), a static RAM (SRAM), or a synchronous dynamic RAM (SDRAM)) or a nonvolatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash or a NOR flash), a hard drive, or a solid state drive (SSD)). In addition, the memory detachable from the electronic apparatus 100' may be implemented as at least one of a memory card (e.g., a compact flash (CF) memory, a secure digital (SD) memory, a micro secure digital (Micro-SD) memory, a mini secure digital (Mini-SD) memory, an extreme digital (xD) memory, or a multi-media card (MMC) memory), an external memory which may be connected to a universal serial bus (USB) port (e.g., a USB memory), or the like.

At least one processor 120 may control overall operations of the electronic apparatus 100. In detail, at least one processor 120 may be connected to each component of the electronic apparatus 100 and may control the overall operations of the electronic apparatus 100. For example, at least one processor 120 may be electrically connected to a display 110 and the memory 120 and control the overall operations of the electronic apparatus 100. At least one processor 120 may include one or more processors.

At least one processor 120 may perform an operation of the electronic apparatus 100 according to the various embodiments by executing at least one instruction stored in the memory 110.

If the electronic apparatus 100 is implemented as a refrigerator, at least one processor 120 may generate a control signal for controlling an operation of the cold air supply device. For example, the processor 120 may receive temperature information of the storage compartment from a temperature sensor and generate a cooling control signal for controlling the operation of the cold air supply device based on the temperature information.

An artificial intelligence function according to the present disclosure may be operated through the processor and memory of the electronic apparatus.

At least one processor 120 may include one or more processors. Here, at least one processor may include at least one of a central processing unit (CPU), a graphics processing unit (GPU), or a neural processing unit (NPU), and is not limited to the above-described examples of the processors.

The CPU refers to a general-purpose processor capable of performing not only general operations but also artificial intelligence (AI) operations, and may efficiently execute complex programs by using a multi-layered cache structure. The CPU may be advantageous for a serial processing method that enables organic linkage between a previous operation result and a next operation result through sequential operations. The general-purpose processor is not limited to the above-described examples unless specified as the above-mentioned CPU.

The GPU refers to a processor for large-scale operations, such as floating-point operations used in graphics processing, and may perform the large-scale operations in parallel by integrating a large number of cores. In particular, the GPU may be advantageous for parallel operations such as convolution operations compared to the CPU. In addition, the GPU may be used as a co-processor to supplement functions of the CPU. The processor for large-scale operations is not limited to the above-described example unless specified as the above-mentioned GPU.

The NPU refers to a processor specialized for the artificial intelligence operation using an artificial neural network, and may implement each layer included in the artificial neural network in hardware (e.g., silicon). Here, the NPU is specially designed based on requirements of a company, and may thus have a lower degree of freedom than the CPU or the GPU. However, the NPU may efficiently process the artificial intelligence operation required by the company. Meanwhile, as the processor specialized for the artificial intelligence operation, the NPU may be implemented in various forms such as a tensor processing unit (TPU), an intelligence processing unit (IPU), or a vision processing unit (VPU). The artificial intelligence processor is not limited to the above-described example unless specified as the above-mentioned NPU.

In addition, at least one processor 120 may be implemented as a system-on-chip (SoC). Here, the SoC may further include the memory 110, and a network interface, such as a bus, for data communication between the processor 120 and the memory 110, in addition to at least one processor 120.

If the electronic apparatus 100 includes the plurality of processors in the system-on-chip (SoC), the electronic apparatus 100 may perform an artificial intelligence operation (e.g., an operation related to learning or inference of an artificial intelligence model) by using some of the plurality of processors. For example, the electronic apparatus may perform the artificial intelligence operation by using at least one of the GPU, the NPU, the VPU, the TPU, or a hardware accelerator that is specialized for the artificial intelligence operation, such as a convolution operation or a matrix multiplication operation, among the plurality of processors. However, this configuration is only one embodiment, and the electronic apparatus may process the artificial intelligence operation by using the general-purpose processor such as the CPU.

In addition, the electronic apparatus 100 may perform an operation related to the artificial intelligence function by using multiple cores (e.g., dual-core or quad-core) included in one processor. In particular, the electronic apparatus may perform artificial intelligence operation such as the convolution operation or the matrix multiplication operation in parallel by using multiple cores included in the processor.

At least one processor 120 may control the processing of input data according to a predefined operation rule or the artificial intelligence model, stored in the memory 110. The predefined operation rule or the artificial intelligence model may be generated by learning.

Here, "generated by learning" may refer to that the predefined operation rule or artificial intelligence model of a desired feature is generated by applying a learning algorithm to a lot of learning data. Such learning may be performed by a device itself in which the artificial intelligence is performed according to the present disclosure, or may be performed by a separate server/system.

The artificial intelligence model may include a plurality of neural network layers. At least one layer has at least one weight value, and an operation of the layer may be performed based on an operation result of a previous layer and at least one defined operation. Examples of the neural network may include a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep Q-network, and a transformer. However, the neural network of the present disclosure is not limited to the above-described examples unless otherwise specified.

The learning algorithm is a method for training a predetermined target device (e.g., robot) by using a large number of learning data for the predetermined target device to make a decision or a prediction for itself. Examples of the learning algorithms may include a supervised learning algorithm, an unsupervised learning algorithm, a semi-supervised learning algorithm, or a reinforcement learning algorithm. However, the learning algorithm of the present disclosure is not limited to the above-described examples unless otherwise specified. For example, the trained AI model may be an on-device model included in the electronic apparatus 100, and is not limited thereto. For example, the trained AI model may also be implemented on the server.

Hereinafter, for the convenience of description, at least one processor 120 is referred to as the processor 120.

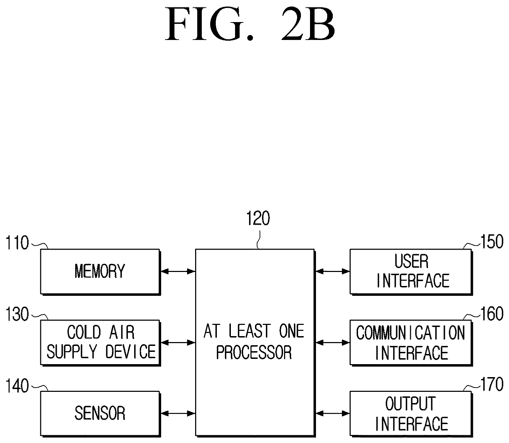

FIG. 2B is a block diagram illustrating a specific configuration of the electronic apparatus according to an embodiment.

Referring to FIG. 2B, the electronic apparatus 100' may include the memory 110, at least one processor 120, a cold air supply device 130, a sensor 140, a user interface 150, a communication interface 160, and an output interface 170. Detailed descriptions of the components shown in FIG. 2B that overlap with those shown in FIG. 2A are omitted.

The cold air supply device 130 may generate cold air based on the refrigeration cycle, which includes the processes of compression, condensation, expansion, and evaporation of the refrigerant. To this end, the cold air supply device 130 may include the refrigeration cycle device that includes a fan, the compressor, the condenser, the expansion device, and the evaporator, and that is capable of driving the refrigeration cycle.

According to at least one embodiment, the cold air supply device 130 may include a semiconductor, such as the thermoelectric element. The thermoelectric element may cool the storage compartment by heating and cooling based on the Peltier effect. For example, the cold air supply device 130 may operate the compressor if a current temperature is higher than a target value. Otherwise, the cold air supply device 130 may stop the operation of the compressor, and either operate only the fan or stop the operation of the fan. In addition, the cold air supply device 130 may adjust operating speeds of the fan and the compressor based on a difference between the current temperature and a target temperature.

The sensor 140 may include the temperature sensor for detecting a temperature. For example, the temperature sensor may detect a temperature at a corresponding time point if a plurality of future time points included in a future time interval described below are reached. In addition, the sensor 140 may include various types of sensors, such as a touch sensor, a proximity sensor, an acceleration sensor, a geomagnetic sensor, a gyro sensor, a pressure sensor, a position sensor, an illuminance sensor, and the like.

The user interface 150 may be implemented as a device such as a button, a touchpad, a mouse, or a keyboard, or as a touch screen also capable of performing the display and manipulation input functions described above. According to an embodiment, the user interface 150 may be implemented as a remote control transmitter/receiver unit to receive a remote control signal. The remote control transmitter/receiver unit may receive the remote control signal from an external remote control device or transmit the remote control signal via at least one of infrared communication, Bluetooth communication, and Wi-Fi communication.

The communication interface 160 may support various communication methods based on an implementation example of the electronic apparatus 100'. For example, the communication interface 160 may communicate with an external device, an external storage medium (e.g., a USB memory), an external server (e.g., a cloud server), or the like by using a communication method such as Bluetooth, access point (AP)-based wireless fidelity (Wi-Fi, wireless local area network (LAN)), Zigbee, wired/wireless local area network (LAN), wide area network (WAN), Ethernet, IEEE 1394, high definition multimedia interface (HDMI), universal serial bus (USB), mobile high-definition link (MHL), audio engineering society/European broadcasting union (AES/EBU) communication, optical communication, or coaxial communication. For example, the communication interface 160 may transmit context information for temperature prediction of the electronic apparatus 100 to the external server.

The output interface 170 may include at least one of a display for outputting an image or a speaker for outputting audio. The display may be implemented as a display that includes a self-luminous element or a display that includes a non-luminous element and a backlight. The speaker may convert a digital audio signal processed by the processor 120 into an analog audio signal, and amplify and output the converted analog audio signal. For example, the speaker may include at least one speaker unit, a digital-to-analog (D/A) converter, an audio amplifier, or the like capable of outputting at least one channel. For example, the output interface 170 may output various notifications, messages, information, or the like related to the temperature control generated by the processor 120.

In addition, the electronic apparatus 100' may further include a camera and a microphone based on implementation example.

The camera may be turned on and capture an image based on a predetermined event. The camera may convert the captured image into an electrical signal and generate image data based on the converted signal. For example, the processor 120 may use the image captured by the camera as context data of the electronic apparatus 100.

The microphone (not shown) is a component for receiving a user voice or other sounds and converts the same into audio data. For example, the processor 120 may use audio received through the microphone as the context data of the electronic apparatus 100'. However, according to another embodiment, the electronic apparatus 100 may receive the user voice input from the external device through the communication interface 160.

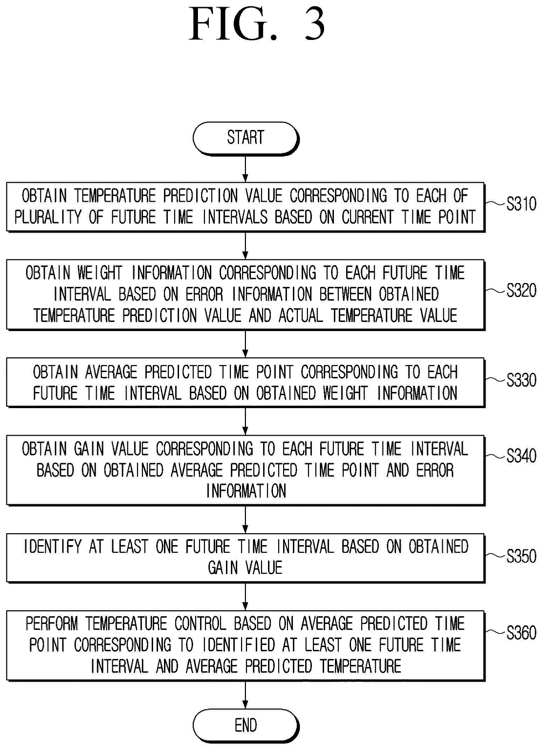

FIG. 3 is a flowchart illustrating a control method for an electronic apparatus according to at least one embodiment.

According to an embodiment shown in FIG. 3, the processor 120 may obtain the temperature prediction value corresponding to each of the plurality of future time intervals based on a current time point (S310). Here, the time interval may be a time interval extending from a first specific future time point to a second specific future time point thereafter, based on the current time point. The plurality of future time intervals may be time intervals in which at least one of the first specific time point at which the time interval starts or the second specific time point at which the time interval ends is different.

The processor 120 may obtain weight information corresponding to each future time interval based on error information between the temperature prediction value obtained in step S310 and an actual temperature value (S320). For example, the weight information may be inversely proportional to a magnitude of the error information.

For example, the weight information may increase as the magnitude of the error information decreases, and may decrease as the magnitude of the error information increases. In addition, the weight information may be proportional to a time length from the current time point to each of the plurality of future time intervals. For example, the weight information may increase as the future time interval is farther away from the current time point, and may decrease as the time interval is closer thereto.

The processor 120 may obtain an average predicted time point corresponding to each future time interval based on the weight information obtained in step S320 (S330).

For example, processor 120 may obtain the average predicted time point corresponding to each future time interval by multiplying a weight value of each future time interval by each future time interval.

The processor 120 may obtain a gain value corresponding to each future time interval based on the average predicted time point obtained in step S330 and the error information (S340).

For example, the gain value may be inversely proportional to the magnitude of the error information. For example, the gain value may increase as the magnitude of the error information decreases and decrease as the magnitude of the error information increases. In addition, the gain value may be proportional to a time length from the current time point to the average predicted time point. For example, the gain value may increase as the average predicted time point is farther away from the current time point, and may decrease as the average predicted time point is closer thereto.

The processor 120 may identify at least one future time interval based on the gain value obtained in step S340 (S350). For example, the processor 120 may identify a future time interval having the largest gain value among the plurality of future time intervals.

Next, the processor 120 may perform the temperature control based on the average predicted time point corresponding to at least one future time interval identified in step S350 and the average predicted temperature (S360).

For example, the processor 120 may obtain a first temperature prediction value corresponding to each of a plurality of first future time points included in a first future time interval based on the current time point. Next, the processor 120 may obtain first weight information corresponding to each of the plurality of first future time points based on error information corresponding to the obtained first temperature prediction value. Next, the processor 120 may identify a first average predicted time point based on the obtained first weight information and a first average predicted temperature corresponding to the first average predicted time point.

For example, the processor 120 may obtain a second temperature prediction value corresponding to each of a plurality of second future time points included in a second future time interval based on the current time point. Here, the second future time interval may be a time interval in which at least one of a starting time or an ending time is different from the first future time interval. Next, the processor 120 may obtain second weight information corresponding to each of the plurality of second future time points based on error information corresponding to the obtained second temperature prediction value. In addition, the processor 120 may identify a second average predicted time point based on the obtained second weight information and a second average predicted temperature corresponding to the second average predicted time point.

Next, the processor 120 may perform temperature control based on the first average predicted temperature corresponding to the first average predicted time point, or based on the second average predicted temperature corresponding to the second average predicted time point.

According to the above-described embodiment, the processor 120 may adaptively perform the temperature prediction to reflect the load varying in real time by calculating the weight based on the calculated error information.

Meanwhile, FIG. 3 illustrates that the sequence of all the steps is mapped for convenience of description. However, the sequence of steps is not necessarily limited to this sequence, such as steps that are unrelated to the sequence or steps that are capable of being performed in parallel.

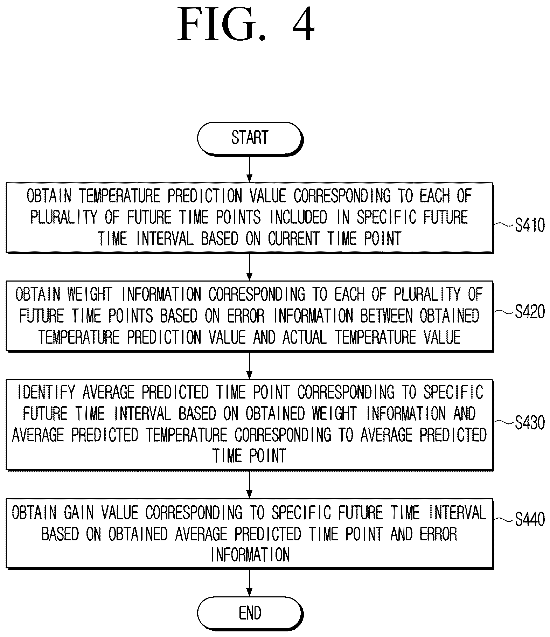

FIG. 4 is a flowchart illustrating a control method for an electronic apparatus according to at least one embodiment.

According to an embodiment shown in FIG. 4, the processor 120 may obtain the temperature prediction value corresponding to each of the plurality of future time points included in a specific future time interval based on the current time point (S410). For example, the processor 120 may identify the specific future time interval as at least one time unit, and identify the plurality of future time points.

For example, if the specific future time interval is fifteen minutes from the current time point, the processor 120 may identify a plurality of future time points in units of five minutes, that is, including a time point five minutes after the current time point, a time point ten minutes after the current time point, and a time point fifteen minutes after the current time point. However, the time unit is not required to be a single unit, and a plurality of time units may be used to identify the plurality of future time points. For example, the processor 120 may identify the plurality of future time points in the future time interval from the current time point to fifteen minutes after the current time point, including a time point one minute after the current time point, a time point five minutes after the current time point, a time point ten minutes after the current time point, and a time point fifteen minutes after the current time point.

The processor 120 may obtain the weight information corresponding to each of the plurality of future time points based on the error information between the temperature prediction value obtained in step S410 and the actual temperature value (S420).

For example, the processor 120 may obtain the weight information corresponding to each of the plurality of future time points based on the error information between the temperature prediction value corresponding to each of the plurality of future time points and the actual temperature value detected at the corresponding time point. For example, the processor 120 may obtain the weight information that is inversely proportional to a magnitude of the error information and proportional to a time length to the future time point.

The processor 120 may identify the average predicted time point corresponding to the specific future time interval based on the weight information obtained in step S420 and the average predicted temperature corresponding to the average predicted time point (S430).

For example, the processor 120 may obtain the average predicted time point corresponding to the corresponding future time interval by applying the weight information corresponding to each future time point to each future time point, and may identify the average predicted temperature corresponding to the average predicted time point by applying the weight information corresponding to each future time point to the temperature prediction value corresponding to each future time point.

The processor 120 may obtain a gain value corresponding to the specific future time interval based on the average predicted time point obtained in step S430 and the error information.

For example, the gain value may be inversely proportional to a magnitude of the error information. For example, the gain value may increase as the magnitude of the error information decreases and decrease as the magnitude of the error information increases. In addition, the gain value may be proportional to the time length from the current time point to the average predicted time point. For example, the gain value may increase as the average predicted time point is farther away from the current time point, and may decrease as the average predicted time point is closer thereto.

According to the example described above, if the gain value corresponding to each future time interval is obtained, the processor 120 may identify at least one future time interval based on the obtained gain value as described in step S350.

For example, processor 120 may identify a future time interval having the largest gain value among the plurality of future time intervals. Next, processor 120 may perform the temperature control based on the average predicted time point and the average predicted temperature corresponding to the identified future time interval.

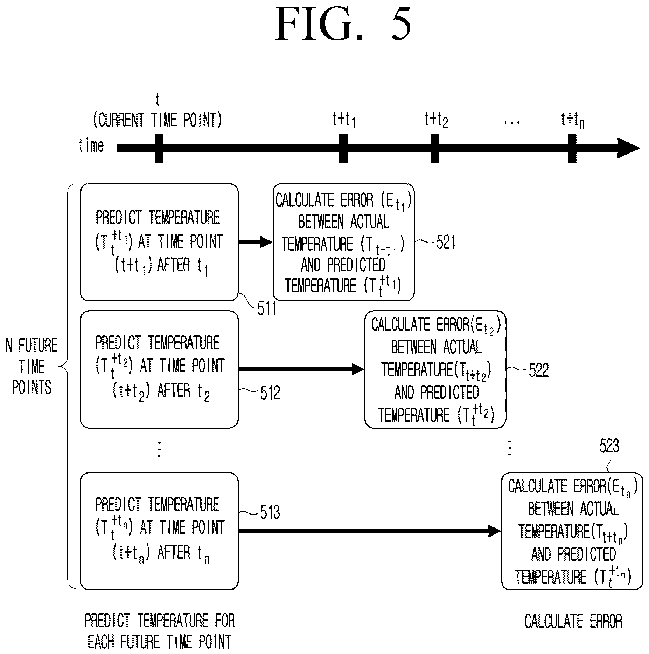

FIG. 5 is a diagram illustrating a method for predicting a temperature at a future time point according to at least one embodiment.

According to an example illustrated in FIG. 5, the processor 120 may identify an arbitrary future time interval D. For example, the future time interval D may be defined by n future time points and values t1, t2, ..., tn defining the respective future time points based on a current time point t. In this case, the processor 120 may identify the temperature prediction value for each time point t + ti (i = 1, 2, ..., n). For example, the processor 120 may identify the temperature prediction value by using at least one of a predetermined equation, a predetermined algorithm, or the trained neural network model. The temperature prediction value predicted at each future time point may be expressed as

$$T_t^{+ti}.$$

For example, the temperature prediction value

$$T_t^{+ti}$$

may be stored in the memory 110, and used to calculate an error if the actual temperature value is measured after the time point $t_i$.

For example, the processor 120 may calculate the error based on a temperature prediction value

$$T_{t-ti}^{+ti}$$

for the current time point at a past time by $t_i$ and a current actual temperature value $T_t$ based on the current time point t. In addition, the processor 120 may use the calculated error to calculate the weight for each future time by $t_i$. In this case, the weight may increase as the error decreases, and may decrease as the error increases. The processor 120 may use the calculated weight to obtain the average predicted time point and the average predicted temperature corresponding to the future time interval.

Meanwhile, according to an embodiment, the processor 120 may obtain the temperature prediction value of each future time interval by using the trained neural network model (or the artificial intelligence model). Hereinafter, a method using the neural network model is described. However, at least some of operations described below may be performed using equations, algorithms, or the like instead of the neural network model.

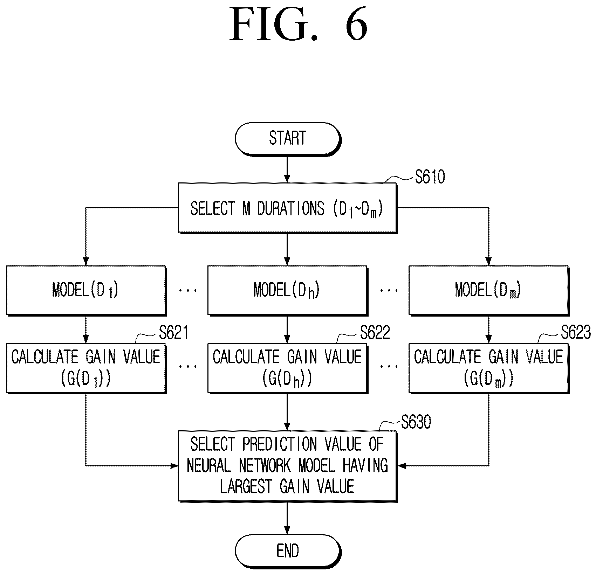

FIG. 6 is a diagram illustrating a method for predicting the temperature by using the neural network model according to at least one embodiment.

For example, if the neural network model is implemented in the external device (e.g., the server), the electronic apparatus 100 may transmit, to the external device (e.g., the external server), a plurality of context information related to the operation of the electronic apparatus 100, and receive, from the external device, the temperature prediction values respectively corresponding to the plurality of future time points included in each of the plurality of future time intervals.

In another example, if the neural network model is implemented as the on-device model included in the electronic apparatus 100, the electronic apparatus 100 may receive the temperature prediction values respectively corresponding to the plurality of future time points included in each of the plurality of future time intervals by inputting the plurality of context information related to the operation of the electronic apparatus 100 into the neural network model.

According to an embodiment shown in FIG. 6, the processor 120 may identify an optimal future time interval among the plurality of future time intervals by using the neural network model.

For example, the processor 120 may identify m future time intervals D1 to Dm (S610) and identify neural network models Model D1 to Model Dm respectively corresponding to the future time intervals.

Here, each of the neural network models Model D1 to Model Dm may be trained to output the temperature prediction value corresponding to each of the m future time intervals D1 to Dm.

For example, the processor 120 may calculate gain values respectively corresponding to the neural network models Model D1 to Model Dm (S621, S622, and S623), and obtain the optimal future time interval and an optimal temperature prediction value by using a neural network model having the largest gain value (S630).

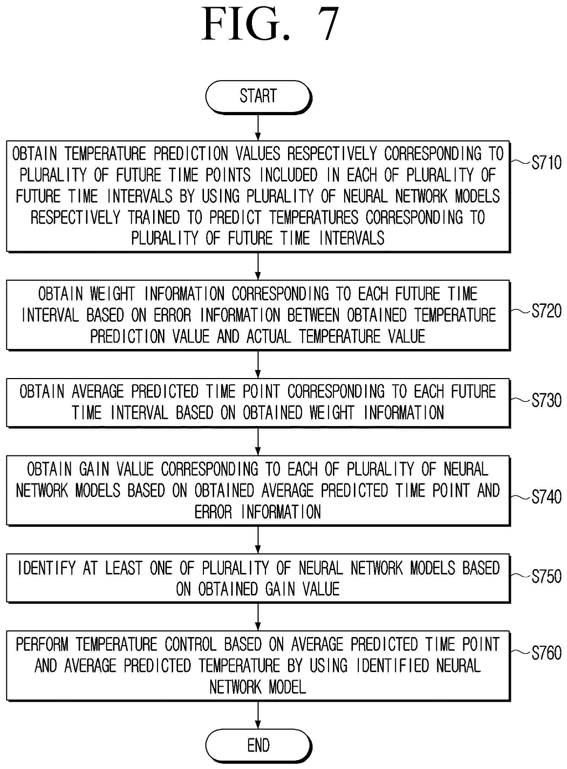

FIG. 7 is a diagram illustrating a specific method for predicting the temperature by using the neural network model according to at least one embodiment.

According to at least one embodiment, the processor 120 may obtain the temperature prediction values respectively corresponding to the plurality of future time points included in each of the plurality of future time intervals by using a plurality of neural network models respectively trained to predict temperatures corresponding to the plurality of future time intervals (S710). Here, the plurality of future time intervals may be different future time intervals based on the current time point.

For example, the first future time interval may be an interval from one minute to fifteen minutes after the current time point, the second future time interval may be an interval from five minutes to fifteen minutes after the current time point, and a third future time interval may be an interval from ten minutes to thirty minutes after the current time point.

For example, the processor 120 may obtain a plurality of first temperature prediction values corresponding to different first future time points based on the current time point included in the first future time interval by using a first neural network model trained to predict a temperature corresponding to the first future time interval. In addition, the processor 120 may obtain a plurality of second temperature prediction values corresponding to different second future time points included in the second future time interval by using a second neural network model trained to predict a temperature corresponding to the second future time interval.

Next, the processor 120 may obtain weight information corresponding to each future time interval based on the error information between the temperature prediction value obtained in step S710 and the actual temperature value (S720).

For example, the processor 120 may obtain first error information corresponding to the first future time interval based on the error information between the obtained first temperature prediction value and the actual temperature value. In addition, the processor 120 may obtain second error information corresponding to the second future time interval based on the error information between the obtained second temperature prediction value and the actual temperature value.

For example, the processor 120 may obtain the first weight information based on time information for the first future time interval and the first error information. In addition, the processor 120 may obtain the second weight information based on time information for the second future time interval and the second error information.

Next, the processor 120 may obtain the average predicted time point corresponding to each future time interval based on the weight information obtained in step S720 (S730).

For example, the processor 120 may obtain a first average predicted temperature corresponding to the first neural network model and a first average predicted time point based on the first weight information. In addition, the processor 120 may obtain a second average predicted temperature corresponding to the second neural network model and a second average predicted time point based on the second weight information.

Next, the processor 120 may obtain the gain value corresponding to each of the plurality of neural network models based on the average predicted time point corresponding to each future time interval that is obtained in step S730 and the error information (S740).

For example, the processor 120 may obtain a first gain value corresponding to the first neural network model based on the first error information and the first average predicted time point. In addition, the processor 120 may obtain a second gain value corresponding to the second neural network model based on the second error information and the second average predicted time point.

Next, the processor 120 may identify at least one of the plurality of neural network models based on the gain value obtained in step S740 (S750).

For example, processor 120 may identify a neural network model having the larger gain value between the first and second neural network models.

Next, the processor 120 may perform the temperature control based on the average predicted time point and the average predicted temperature identified by using the neural network model identified in step S750.

For example, the processor 120 may obtain the plurality of first weight information based on the different first future time points included in the first future time interval and the first error information. Next, the processor 120 may obtain the first average predicted temperature corresponding to the first neural network model and the first average predicted time points by applying the plurality of first weight information to the first different future time points and the plurality of first temperature prediction values.

For example, the processor 120 may obtain the plurality of second weight information based on the different second future time points included in the second future time interval and the second error information. Next, the processor 120 may obtain the second average predicted temperature corresponding to the second neural network model and the second average predicted time points by applying the second weight information to the different second future time points and the plurality of second temperature prediction values.

Meanwhile, FIG. 7 illustrates that the sequence of all the steps is mapped for convenience of description. However, the sequence of steps is not necessarily limited to this sequence, such as steps that are unrelated to the sequence or steps that are capable of being performed in parallel.

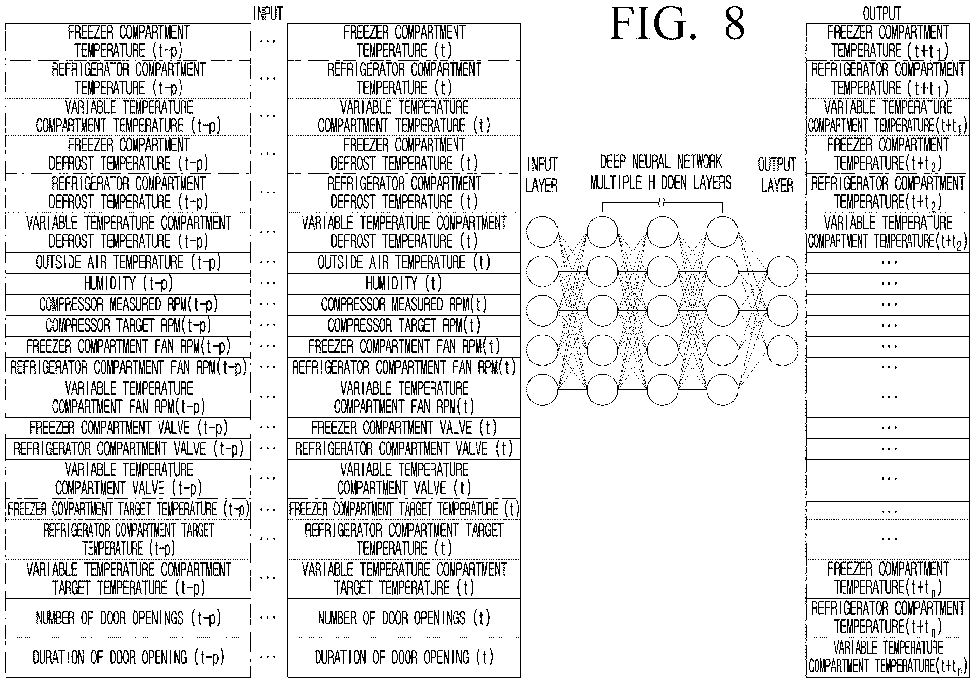

FIG. 8 is a diagram illustrating an operation of the neural network model according to at least one embodiment.

According to an embodiment, if the neural network model is implemented as the on-device model, the processor 120 may input the plurality of context information related to the operation of the electronic apparatus 100 into the plurality of neural network models to obtain the temperature prediction values respectively corresponding to the plurality of future time points included in each of the plurality of future time intervals.

According to an embodiment, if the neural network model is implemented in the external device, the processor 120 may transmit the plurality of context information related to the operation of the electronic apparatus 100 to the external device (e.g., the external server), and receive the temperature prediction values respectively corresponding to the plurality of future time points included in each of the plurality of future time intervals from the external device.

Hereinafter, for convenience of description, it is assumed that the neural network model is implemented in the external device.

For example, the external device may obtain temperature prediction values respectively corresponding to the plurality of future time points included in each of the plurality of future time intervals by inputting the plurality of context information received from the electronic apparatus 100 into the plurality of neural network models. Here, the plurality of neural network models may refer to models trained to predict temperatures corresponding to a plurality of different time points included in each of different future time intervals. For example, training of the plurality of neural network models may be performed on the external device (e.g., the external server) or on a separate training server. For example, if training is performed on the separate training server, the external device may download and use the trained neural network model from the external server.

For example, as shown in FIG. 8, the input data of the neural network model may include various context data generated during the operation of the electronic apparatus 100. For example, if the electronic apparatus 100 is implemented as a refrigeration/freezer device, the context data may include a temperature of the cabinet inside the refrigerator compartment/the freezer compartment, the number/duration of door openings, whether the motor/the compressor is in operation and an operation duration thereof, various sensor data, or the like.

For example, the context data may include at least one of a freezer compartment temperature, a refrigerator compartment temperature, a variable temperature compartment temperature, a freezer compartment defrost temperature, a refrigerator compartment defrost temperature, an outside air temperature, humidity, a compressor measured revolutions per minute (RPM), a compressor target RPM, a freezer compartment fan RPM, a refrigerator compartment fan RPM, a variable temperature compartment fan RPM, a freezer compartment valve value, a refrigerator compartment valve value, a variable temperature compartment valve value, a freezer compartment target temperature, a refrigerator compartment target temperature, a variable temperature compartment target temperature, the number of door openings, or the duration of door opening. For example, the neural network model may learn a data change pattern during a predetermined interval by learning past data based on the current time point.

However, such context data is an example corresponding to the refrigerator, and the context data corresponding to the electronic apparatus 100 may vary depending on an implementation example of the electronic apparatus 100. For example, in case of an air conditioner, the context data may include information such as a time point (e.g., season or day/night), weather (e.g., rainy), a space size, the number of people in the space, or states of people in the space (e.g., exercising or sleeping).

As an example, as shown in FIG. 4, a total of twenty-one types of data may be collected at one time point, and twenty-one types of data collected a total of p+1 times along a time axis may be used as input data for the neural network model. That is, 21 * (p + 1) data may be used as the input data for the neural network model.

For example, output data used for training the neural network model may be each actual temperature value of at least one of the freezer compartment, an internal compartment, or the variable temperature compartment at each of the plurality of future time points t+t1, t+t2, ..., t+tn, based on the current time point t.

For example, if each of the plurality of future time points t+t1, t+t2, ..., t+tn is reached based on the current time point t, the actual temperature value of at least one of the freezer compartment, the internal compartment, or the variable temperature compartment may be measured by using the sensor or the like and used as the output data for the neural network model. For example, the external device may obtain the actual temperature value based on a database that stores the actual temperature value pre-measured at each of the plurality of future time points t+t1, t+t2, ..., t+tn based on the current time point t, and use the obtained actual temperature value as the output data for the neural network model.

In another example, the output data used for training the neural network model may refer to the temperature prediction value of at least one of the freezer compartment, the internal compartment, or the variable temperature compartment corresponding to each of the plurality of future time points t+t1, t+t2, ..., t+tn based on the current time point t. For example, the external device may obtain the temperature prediction value of at least one of the internal compartment or the variable temperature compartment corresponding to each of the plurality of future time points t+t1, t+t2, ..., t+tn based on the current time point t by using at least one of the predetermined equation, the predetermined algorithm, or the trained temperature prediction model (i.e., another neural network model), and use the obtained temperature prediction value as the output data for the neural network model.

In another example, the output data used for training the neural network model may include both the above-described actual temperature value and the temperature prediction value. For example, the external device may apply the same or different weights to the actual temperature value and the temperature prediction value corresponding to each of the plurality of future time points t+t1, t+t2, ..., t+tn, and use the values to train the neural network model.

According to an embodiment, the type and number of input data and output data used to train the neural network model may be adjusted to suit a product implementation example, a product situation, or the like.

For example, at least a portion of the neural network model may be implemented as the on-device model included in the external device (e.g., the server) or the electronic apparatus 100. Training of the neural network model may also be performed on the external device and/or the electronic apparatus 100. However, for convenience of description, it is assumed that training of the neural network model is performed on the external device.

According to an embodiment, the external device may use the output data used for training the neural network model, i.e., the temperature values (e.g., the actual temperature value and the temperature prediction value) of at least one of the freezer compartment, the internal compartment, or the variable temperature compartment corresponding to each of the plurality of future time points t+t1, t+t2, ..., t+tn based on the current time point t, to be converted and used for training the neural network model.

For example, the external device may convert the output data by applying a predetermined parameter $\beta$ to the temperature values of at least one of the freezer compartment, the internal compartment, or the variable temperature compartment corresponding to each of the plurality of future time points t+t1, t+t2, ..., t+tn. For example, the parameter $\beta$ may be a fixed value calculated through experimentation, and be determined as a value within a range of 0 to 1 ($0<\beta<=1$).

For example, the external device may convert the output data by applying the time difference information t1, t2, ..., tn based on the current time point and the parameter $\beta$ to the temperature values $T_{t+t1}, T_{t+t2}, ..., T_{t+tn}$ of at least one of the freezer compartment, the internal compartment, or the variable temperature compartment corresponding to each of the plurality of future time points t+t1, t+t2, ..., t+tn. For example, the external device may convert the output data as $T_{t+t1}$ * t1 * $\beta$, $T_{t+t2}$ * t2 * $\beta$, ..., $T_{t+tn}$ * tn * $\beta$. In this case, the temperature $T_{t+tk}$ may increase after the time point t+tk, where a product of tk (k=1, 2, 3, ...)/(k=1,2,3, ....) and $\beta$ is greater than 1, and may decrease in the opposite case. A loss function may be used to measure a difference between the predicted value and the actual value by using the neural network model. By generating a greater error during a loss function operation, the loss function may effectively force a further reduction in the error occurring during the temperature prediction. Accordingly, the electronic apparatus 100 may achieve improved accuracy of the loss function operation while training the neural network model.

According to an embodiment, at least one of the output data before the conversion and the output data after the conversion may be used for training the neural network model. For example, only the output data before the conversion may be used for training the neural network model, or only the output data after the conversion may be used for training the neural network model, or both the output data before the conversion and the output data after the conversion may be used for training the neural network model.

According to another embodiment, the output data before the conversion may be used to train a basic model (or a basic neural network model), and the output data after the conversion may be used to train an advanced model (or an advanced neural network model). For example, the basic model may be implemented to include the first and second neural network models trained to predict temperatures corresponding to different future time intervals based on the output data before the conversion. For example, the advanced model may be implemented to include the first and second neural network models trained to predict temperatures corresponding to different future time intervals based on the output data after the conversion.

For example, the basic model and the advanced model may be used in a hybrid manner under different conditions. For example, the temperature prediction value may be obtained by using the basic model under one condition, and the temperature prediction value may be obtained by using the advanced model under another condition. For example, the output of the neural network model that satisfies a specific condition may be selected after the temperature prediction value is obtained using both the basic model and the advanced model.

In another example, the output of the basic model and the output of the advanced model may be combined to obtain a final temperature prediction value. For example, different gains may be applied to the output of the basic model and the output of another model to obtain the final temperature prediction value.

Hereinabove, the external device is described as converting the output data and using the converted data to train the neural network model. However, according to an embodiment, the electronic apparatus 100 may perform the output data conversion and/or training of the neural network model.

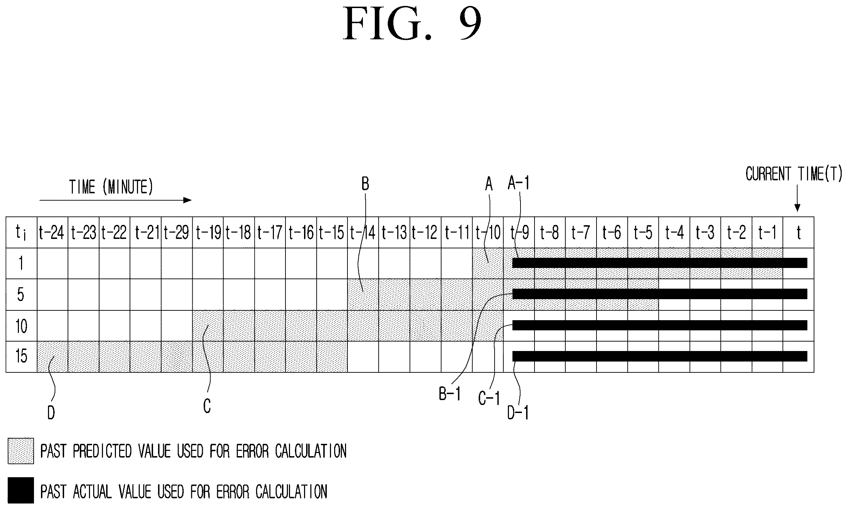

Hereinafter, a method for calculating the error information, the weight information, and an average temperature prediction value by using the neural network model is described with reference to FIG. 9.

FIG. 9 is a diagram illustrating a method for calculating the error information according to at least one embodiment.

For example, the processor 120 may calculate the error information corresponding to the future time interval based on one or a combination of a mean squared error (MSE), a root mean squared error (RMSE), a mean absolute error (MAE), or a mean absolute percentage error (MAPE). For example, a method for calculating the error by using the MSE based on a value predicted immediately before the current time point t may be as shown in Equation 1.

【Equation 1】

$$E_{t_i} = \left( T_{t-t_i}^{+t_i} - T_t \right)^2,$$

where i is 1,2, ... , *n*.

For example,

$$T_{t-ti}^{+ti}$$

may be a temperature prediction value for a time point after $t_i$ predicted at a time point t-$t_i$, and $T_t$ may be the actual temperature value at the current time point.

However, upon using the output data converted during training of the neural network model as described above, the processor 120 may correct the temperature prediction value by using the neural network model based on a converted portion of the output data. For example, if the temperature prediction value is obtained by using the neural network model, the processor 120 may obtain the temperature prediction value of the time point after $t_i$ by dividing the temperature prediction value

$$T_{t-ti}^{+ti}$$

by the converted portion of the output data, i.e., $t_i * \beta$, and correcting the obtained temperature prediction value. That is, the processor 120 may obtain the final temperature prediction value as

$$\frac{T_{t-ti}^{+ti}}{t_i * \beta}.$$

Meanwhile, upon calculating the error by using the MSE based on past k temperature prediction values, the processor 120 may calculate the error by using Equation 2 below. Equation 2 represents an embodiment for performing the prediction at every unit time $u_j$, and may not be limited thereto. If k = 1, Equation 2 may be equivalent to Equation 1.

【Equation 2】

$$E_{t_i} = \frac{\sum_{j=0}^{k-1}\left(T_{t-t_i-u_j}^{+t_i} - T_{t-u_j}\right)^2}{k},$$

where k ≥ 1.

$$T_{t-t_i-u_j}^{+t_i}$$

may be a temperature prediction value for the time point after $t_i$ predicted at a time point $t - t_i - u_j$, and $T_{t-u_j}$ may be the actual temperature value at a time point before the current time point by the unit time $u_j$.

FIG. 9 is a diagram illustrating past temperature prediction values and actual temperature measurement values used for calculating a value $E_{t_i}$ in a case where k = 10, n = 4, and $t_1 = 1, t_2 = 5, t_3 = 10, t_4 = 15$, and illustrates an embodiment in which it is assumed that the prediction is performed every minute, which is the unit time $u_j$.

For example, referring to FIG. 9, a temperature prediction value obtained one minute after the past time point t-10 may be "A", and the actual temperature measurement value may be A-1. In addition, a temperature prediction value obtained five minutes after the past time point t-14 may be "B", and the actual temperature measurement value may be B-1. In addition, a temperature prediction value obtained ten minutes after the past time point t-19 may be "C", and the actual temperature measurement value may be C-1. In addition, a temperature prediction value obtained fifteen minutes after the past time point t-24 may be "D", and the actual temperature measurement value may be D-1.

If the error information is obtained by using the above-described method, the processor 120 may obtain the weight information based on the obtained error information. The weight information may be inversely proportional to the error information. For example, a relatively small weight may be applied to a temperature prediction value having large error information, and a relatively large weight may be applied to a temperature prediction value having small error information. Predicting the future time point corresponding to the control cycle duration may be advantageous for energy saving, and a weight $W_{t_i}$ may thus be calculated by using $t_i$ as the numerator, and a smaller error may increase the prediction accuracy, and the weight may thus be calculated by using $E_{t_i}$ as the denominator. For example, the weight $W_{t_i}$ may be calculated using a method as shown in Equation 3 below.

【Equation 3】

$$W_{t_i} = \frac{t_i}{E_{t_i}}.$$

However, the present disclosure is not limited to thereto, and the weight $W_{t_i}$ may be calculated based on Equation 4 below.

【Equation 4】

$$W_{t_i} = \frac{t_i^{\alpha}}{E_{t_i}}.$$

According to an embodiment, the processor 120 may update $\alpha$ based on the difference between the actual temperature measurement value and the temperature prediction value, and identify which one of the basic model and the advanced model to use or which output value of the basic model and the advanced model to select based on the updated $\alpha$.

For example, $\alpha$ may be updated based on the difference between the actual temperature measurement value and the temperature prediction value. For example, $\alpha$ may be reduced or increased based on the difference between the actual temperature measurement value and the temperature prediction value within a predetermined range. For example, $\alpha$ may be reduced or increased within a range between -1 and 1 ($-1 \le \alpha \le 1$). For example, Equation 3 may be applied to a case where $\alpha$ is 1.

For example, if the actual temperature measurement value is $T_t$ and the temperature prediction value is $T_t^{ti}\left(= T^{ti}\right)$, the processor 120 may update $\alpha$ by comparing a difference $T_t - T_t^{ti}$ between the actual temperature measurement value and the temperature prediction value with at least one threshold value, and compare the updated $\alpha$ with a predetermined value (or a predefined value) to identify which one of the basic model and the advanced model to use.

For example, the processor 120 may reduce $\alpha$ if a difference between the actual temperature measurement value and the first temperature prediction value, i.e., an absolute value of $T_t - T_t^{t_i^{max}}$, is greater than or equal to a first threshold value. For example, the first temperature prediction value ( $T_t^{t_i^{max}}$ ) may refer to a temperature prediction value obtained at a predicted time point timax that is furthest from time point after $t_i$. However, the present disclosure is not limited thereto, and the first temperature prediction value ( $T_t^{t_i^{max}}$ ) may refer to a maximum value among the temperature prediction values obtained after the time point $t_i$.

For example, the processor 120 may incrementally reduce $\alpha$ if the absolute value of $T_t - T_t^{t_i^{max}}$ is greater than or equal to the first threshold value. For example, the processor 120 may incrementally reduce

$\alpha$ by a predetermined first value.

For example, the processor 120 may increase $\alpha$ if the difference between the actual temperature measurement value and the first temperature prediction value, i.e., the absolute value of $T_t - T_t^{t_i^{max}}$ is less than a second threshold value.

For example, the processor 120 may incrementally increase $\alpha$ if the absolute value of $T_t - T_t^{t_i^{max}}$ is less than the second threshold value. For example, the processor 120 may incrementally increase $\alpha$ by a predetermined second value.

For example, if thresh_dec represents the first threshold value, thresh_inc represents the second threshold value, dec_step represents a first value ($\alpha$ -) used for incrementally reducing $\alpha$, and inc_step represents a second value ($\alpha$ +) used for incrementally increasing $\alpha$, the following control logic may be implemented.

$$\text{"if}\,(\mathbf{abs}(^{T_t - T_t^{t_i^{max}}}) >= \text{thresh\_dec}):$$

$$\alpha \,\text{-= dec\_step}$$

$$\text{else if}\,(\mathbf{abs}(^{T_t - T_t^{t_i^{max}}}) < \text{thresh\_inc}):$$

$$\alpha \,\text{+= inc\_step"}$$

For example, the above logic may have values such $\alpha_{max} = 1$, $\alpha_{min} = -1$, $\alpha_{min} \le \alpha \le \alpha_{max}$, dec_step = 0.5, inc_step = 1.0, thresh_dec = 2, and thresh_inc = 1. Each value is only an example and may be calculated through experimentation. The present disclosure is not limited thereto, and each value may vary depending on the implementation example, specifications, usage environment, user preference, or the like of the electronic apparatus 100.

According to an embodiment, the processor 120 may determine whether to use the basic model or the advanced model for the temperature prediction based on the updated $\alpha$. For example, the processor 120 may determine whether to use the basic neural network model or the advanced model for the temperature prediction by comparing the updated $\alpha$ with the predetermined value. For example, the processor 120 may use the basic model for the temperature prediction if $\alpha$ is less than or equal to the predetermined value, and use the advanced model for the temperature prediction if $\alpha$ is greater than the predetermined value. For example, the predetermined value may be $\alpha_{max}/2$, which is only an example. For example, the predetermined value may be calculated through experimentation. The present disclosure is not limited thereto, and such values may vary depending on the implementation example, specifications, usage environment, user preference, or the like of the electronic apparatus 100.

For example, the control logic may be implemented as follows.

$$\text{"if}(^{\alpha} <= {}^{\alpha_{max}}/2):$$

use the basic model
else
use the advanced model"

According to an embodiment, the weight may be normalized based on Equation 5 below, and is not limited thereto.

【Equation 5】

$$W_{t_i} = \frac{W_{t_i}}{\sum_{t_i} W_{t_i}}.$$

If the weight is obtained, the processor 120 may obtain an average predicted time point $\overline{t_D}$ in the future time interval D and an average temperature $\overline{T_D}$ at this time point based on the obtained weight. For example, the processor 120 may calculate $\overline{t_D}$ based on Equation 6, and calculate $\overline{T_D}$ based on Equation 7.

【Equation 6】

$$\overline{t_D} = \sum\nolimits_{t_i} W_{t_i} \cdot (t + t_i).$$

【Equation 7】

$$\overline{T_D} = \sum\nolimits_{t_i} W_{t_i} \cdot T_t^{+t_i}.$$

$\overline{t_D}$ and $\overline{T_D}$ may be a future predicted time point and a final temperature prediction value at the future predicted time point, respectively, corrected based on the weight. That is, the processor 120 may predict that the temperature is $\overline{T_D}$, on average, after the time $\overline{t_D}$ in the future time interval. Accordingly, the predicted time point and the temperature prediction value may be the average predicted time point and the average predicted temperature in the future time interval.

The processor 120 may calculate the average predicted time point and the average predicted temperature in each of the plurality of future time intervals by using the above-described method.

As described above, if a final temperature is predicted based on the weight, the processor 120 may predict an optimal temperature by quickly responding to a real-time change in the load. That is, if the load does not change frequently, the larger $t_i$ increases a value $W_{t_i}$, thus enabling the processor 120 to predict a temperature at the farthest possible future time point. Conversely, if the load changes frequently, the smaller $t_i$ increases the value $W_{t_i}$, thus enabling the processor 120 to predict a temperature at the nearest possible future time point.

Meanwhile, the processor 120 may calculate a gain value for each neural network model, for example, a neural network model $D_h$. For example, the gain may be greater as a final predicted future time point of the model $D_h$ is larger, and an error $E_{D_h}$ occurring in the final predicted temperature is smaller. Therefore, $G(D_h)$ may be calculated based on Equation 8 as below.

【Equation 8】

$$G(D_h) = \frac{\overline{t_{D_h}}}{E_{D_h}}.$$

Here, for example, $E_{D_h}$ may be calculated based on Equation 9 below, and is not limited to this equation. For example, $E_{D_h}$ may also be calculated using several past values. $T_{\overline{t_{D_h}}}$ represents the actual temperature value obtained at the time point $\overline{t_{D_h}}$.

【Equation 9】

$$E_{D_h} = (\overline{T_{D_h}} - T_{\overline{t_{D_h}}})^2.$$

Here, $T_{\overline{t_{D_h}}}$ represents the actual temperature value obtained at the time point $\overline{t_{D_h}}$.

Next, the processor 120 may select the model $D_h$ having the largest $G(D_h)$ among the plurality of neural network models, and perform optimal temperature control of the device such as a refrigerator or an air conditioner based on the values of $\overline{t_{D_h}}$ and $\overline{T_{D_h}}$.

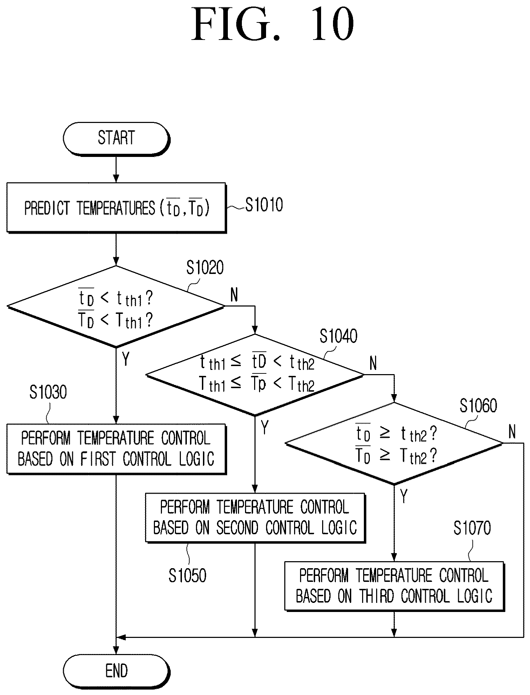

FIG. 10 is a flowchart illustrating a method for selecting the control logic according to at least one embodiment.

According to at least one embodiment, the processor 120 may select the control logic based on the average predicted time point and the average predicted temperature in a future time interval selected based on the gain value, and perform the temperature control based on the selected control logic.

For example, the processor 120 may perform the temperature control based on first control logic if the average predicted time point is less than the first threshold value and the average predicted temperature is less than the second threshold value. In addition, the processor 120 may perform the temperature control based on second control logic if the average predicted time point is greater than or equal to the first threshold value and the average predicted temperature is greater than or equal to the second threshold value.

For example, the processor 120 may perform the temperature control based on the first control logic if the average predicted time point is less than the first threshold value and the average predicted temperature is less than the second threshold value. In addition, the processor 120 may perform the temperature control based on the second control logic if the average predicted time point is greater than or equal to the first threshold value and less than a third threshold value and the average predicted temperature is greater than or equal to the second threshold value and less than a fourth threshold value. In addition, the processor 120 may perform the temperature control based on third control logic if the average predicted time point is greater than or equal to the third threshold value and the average predicted temperature is greater than or equal to the fourth threshold value. For example, the first control logic, the second control logic, and the third control logic may be the control logic having different control cycle times.

Referring to FIG. 10, the processor 120 may compare the average predicted time point $\overline{t_D}$ and the average predicted temperature value $T_D$ with predefined threshold values, select the control logic appropriate for the situation, and perform the temperature control based on the selected control logic.

For example, the processor 120 may predict the average predicted time point $\overline{t_D}$ and the average predicted temperature $\overline{T_D}$ by using the above-described method (S1010).

For example, the processor 120 may perform the temperature control based on the first control logic (S1030) if the average predicted time point $\overline{t_D}$ is less than $t_{th1}$ and the average predicted temperature $\overline{T_D}$ is less than $T_{th1}$ (S1020:Y).

For example, the processor 120 may perform the temperature control based on the second control logic (S1050) if the average predicted time point $\overline{t_D}$ is greater than or equal to $t_{th1}$ and less than $t_{th2}$, and the average predicted temperature $\overline{T_D}$ is greater than or equal to $T_{th1}$ and less than $T_{th2}$ (S1040:Y).

For example, the processor 120 may perform the temperature control based on the third control logic (S1070) if the average predicted time point $\overline{t_D}$ is greater than or equal to $t_{th2}$ and the average predicted temperature $\overline{T_D}$ is greater than or equal to $T_{th}2$ (S1060:Y).

Here, each of the first control logic, the second control logic, and the third control logic may be control logic including a control cycle having a different duration. For example, if the value $\overline{t_D}$ is one minute, the processor 120 may select the control logic having a control cycle duration of approximately one minute, and if the value $\overline{t_D}$ is twenty minutes, the processor 120 may select a control cycle duration of approximately twenty minutes. Based on the value $\overline{T_D}$, the processor 120 may determine whether to increase or decrease the temperature and to what degree the temperature is adjusted based on the selected control logic.

Meanwhile, FIG. 10 illustrates that the sequence of all the steps is mapped for convenience of description. However, the sequence of steps is not necessarily limited to this sequence, such as steps that are unrelated to the sequence or steps that are capable of being performed in parallel.

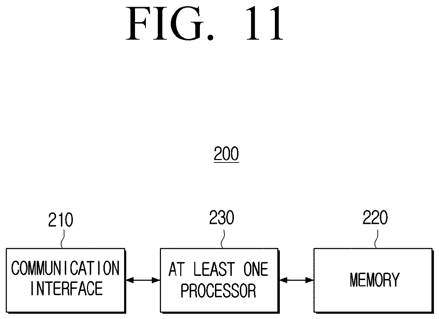

FIG. 11 is a block diagram illustrating a configuration of an electronic apparatus according to at least one embodiment.

Referring to FIG. 11, an electronic apparatus 200 may include a communication interface 210, a memory 220, and at least one processor 230. Implementation examples of the communication interface 210, the memory 220, and at least one processor 230 are respectively identical/similar to the implementation examples of the communication interface 160, the memory 110, and at least one processor 120 shown in FIGS. 2A and 2B, and detailed descriptions thereof are thus omitted.

For example, the electronic apparatus 200 may be implemented as the server. For example, the server may store a plurality of neural network models, input data received from the electronic apparatus 100 into the plurality of neural network models, and transmit output data to the electronic apparatus 100.

For example, the server may obtain temperature prediction values respectively corresponding to the plurality of future time points included in each of the plurality of future time intervals by inputting a plurality of context information received from the electronic apparatus 100 into the plurality of neural network models.

Here, the plurality of neural network models may refer to models trained to predict temperatures corresponding to a plurality of different time points included in each of different future time intervals.

The server may transmit, to the electronic apparatus 100, the temperatures corresponding to the plurality of different time points included in each of different future time intervals obtained by using the plurality of neural network models. Alternatively, the server may perform all the operations performed on the electronic apparatus 100 described above (e.g., the weight calculation, the gain value calculation, the average predicted time point, and the average predicted temperature calculation) and transmit, to the electronic apparatus 100, control information (or a control signal) based on the control logic based on a result.

The processor 120 may perform each operation according to the various embodiments described above and may use a module for each operation if necessary. For example, each module may be implemented as at least one software, at least one hardware, and/or a combination thereof. Each module may be implemented to use the predefined algorithm, the predefined equation, and/or the trained artificial intelligence model to perform the operation. However, at least some modules may be distributed to the external device.

According to the various embodiments described above, the processor 120 may accurately predict the temperature at the farthest possible time point. In detail, the processor 120 may accurately predict the temperature in real time by adaptively responding to the load irregularly varying in a product having the control cycle duration ranging from at least several minutes to tens of minutes. Therefore, optimal energy savings may be achieved regardless of the load variation.

Meanwhile, the methods according to the various embodiments of the present disclosure described above may be implemented only by software upgrade or hardware upgrade of the conventional electronic apparatus.

In addition, the various embodiments of the present disclosure described above may be performed through an embedded server included in the electronic apparatus, or an external server of the electronic apparatus.

Meanwhile, according to an embodiment of the present disclosure, the various embodiments described above may be implemented in software including an instruction stored on a machine-readable storage medium (for example, a computer-readable storage medium). A machine may be a device that invokes the stored instruction from a storage medium, may be operated based on the invoked instruction, and may include the electronic apparatus (e.g., electronic apparatus A) according to the disclosed embodiments. If the instruction is executed by the processor, the processor may directly perform a function corresponding to the instruction or other components may perform the function corresponding to the instruction under control of the processor. The instruction may include codes provided or executed by a compiler or an interpreter. The machine-readable storage medium may be provided in the form of a non-transitory storage medium. Here, the term "non-transitory" refers to that the storage medium is tangible without including a signal, and does not distinguish whether data are semi-permanently or temporarily stored on the storage medium.

In addition, according to an embodiment, the methods according to the various embodiments described above may be included and provided in a computer program product. The computer program product may be traded as a commodity between a seller and a purchaser. The computer program product may be distributed in a form of the machine-readable storage medium (for example, a compact disc read only memory (CD-ROM)), or may be distributed online through an application store (for example, PlayStore™). In case of the online distribution, at least a part of the computer program product may be at least temporarily stored or temporarily provided on a storage medium such as the memory of a manufacturer server, an application store server, or a relay server.

In addition, each of the components (for example, modules or programs) according to the various embodiments described above may include a single entity or a plurality of entities, and some of the corresponding sub-components described above may be omitted or other sub-components may be further included in the various embodiments. Alternatively or additionally, some of the components (for example, the modules or the programs) may be integrated into the single entity, and may perform functions performed by the respective corresponding components before being integrated in the same or similar manner. Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Although the embodiments are shown and described in the present disclosure as above, the present disclosure is not limited to the above-described specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic apparatus comprising:

   a memory storing at least one instruction; and
   at least one processor connected to the memory and configured to control the electronic apparatus,
   wherein, by executing the at least one instruction, the at least one processor is configured to:

   obtain a temperature prediction value corresponding to each of a plurality of future time intervals based on a current time point,
   obtain weight information corresponding to the each future time interval based on error information between the obtained temperature prediction value and an actual temperature value,
   obtain an average predicted time point corresponding to the each future time interval based on the obtained weight information,
   obtain a gain value corresponding to the each future time interval based on the obtained average predicted time point and the error information, and
   perform temperature control based on an average predicted time point and an average predicted temperature corresponding to at least one future time interval, the at least one future time interval being identified based on the obtained gain value.

2. The apparatus as claimed in claim 1, wherein, by executing the at least one instruction, the at least one processor is configured to:

   obtain a temperature prediction value corresponding to each of a plurality of future time points included in a specific future time interval among the plurality of future time intervals,
   obtain weight information corresponding to each of the plurality of future time points based on the error information between the obtained temperature prediction value and the actual temperature value,
   identify an average predicted time point corresponding to the specific future time interval based on the obtained weight information and identify the average predicted temperature corresponding to the average predicted time point, and
   obtain the gain value corresponding to the specific future time interval based on the obtained average predicted time point and the error information.

3. The apparatus as claimed in claim 2, wherein, by executing the at least one instruction, the at least one processor is configured to:
   obtain the weight information that is inversely proportional to a magnitude of the error information and proportional to a magnitude of a time difference between each of the plurality of future time points and the current time point.

4. The apparatus as claimed in claim 2, wherein, by executing the at least one instruction, the at least one processor is configured to:

   obtain a first temperature prediction value corresponding to each of a plurality of first future time points included in a first future time interval based on the current time point,
   obtain first weight information corresponding to each of the plurality of first future time points based on the error information corresponding to the obtained first temperature prediction value,
   identify a first average predicted time point based on the obtained first weight information and identify a first average predicted temperature corresponding to the first average predicted time point,
   obtain a second temperature prediction value corresponding to each of a plurality of second future time points included in a second future time interval based on the current time point,
   obtain second weight information corresponding to each of the plurality of second future time points based on the error information corresponding to the obtained second temperature prediction value,
   identify a second average predicted time point based on the obtained second weight information and identify a second average predicted temperature corresponding to the second average predicted time point, and

perform the temperature control based on the first average predicted temperature corresponding to the first average predicted time point, or based on the second average predicted temperature corresponding to the second average predicted time point.

5. The apparatus as claimed in claim 1, wherein, by executing the at least one instruction, the at least one processor is configured to:

obtain the temperature prediction values respectively corresponding to a plurality of future time points included in each of the plurality of future time intervals by using a plurality of neural network models respectively trained to predict temperatures corresponding to the plurality of future time intervals,

obtain the weight information corresponding to the each future time interval based on the error information between the obtained temperature prediction value and the actual temperature value,

obtain the average predicted time point corresponding to the each future time interval based on the obtained weight information,

obtain a gain value corresponding to each of the plurality of neural network models based on the obtained average predicted time point and the error information,

identify at least one of the plurality of neural network models based on the obtained gain value, and

perform the temperature control based on the average predicted time point and the average predicted temperature predicted by using the identified at least one of the plurality of neural network models.

6. The apparatus as claimed in claim 5, wherein, by executing the at least one instruction, the at least one processor is configured to:

obtain a plurality of first temperature prediction values respectively corresponding to different first future time points included in a first future time interval by using a first neural network model trained to predict a temperature corresponding to the first future time interval,

obtain first error information corresponding to the first future time interval based on the error information between the obtained plurality of first temperature prediction values and the actual temperature value,

obtain first weight information based on time information for the first future time interval and the first error information,

obtain, based on the first weight information, a first average predicted temperature corresponding to the first neural network model and a first average predicted time point,

obtain a first gain value corresponding to the first neural network model based on the first error information and the first average predicted time point,

obtain a plurality of second temperature prediction values respectively corresponding to different second future time points included in a second future time interval by using a second neural network model trained to predict a temperature corresponding to the second future time interval,

obtain second error information corresponding to the second future time interval based on the error information between the obtained plurality of second temperature prediction values and the actual temperature value,

obtain second weight information based on time information for the second future time interval and the second error information,

obtain, based on the second weight information, a second average predicted temperature corresponding to the second neural network model and a second average predicted time point,

obtain a second gain value corresponding to the second neural network model based on the second error information and the second average predicted time point,

identify a neural network model having a greater gain value between the first and second neural network models, and

perform the temperature control based on the average predicted time point and the average predicted temperature predicted by using the identified neural network model.

7. The apparatus as claimed in claim 6, wherein, by executing the at least one instruction, the at least one processor is configured to:

obtain a plurality of first weight information based on the different first future time points included in the first future time interval and the first error information,

obtain the first average predicted temperature corresponding to the first neural network model and the first average predicted time point by applying the plurality of first weight information to the different first future time points and the plurality of first temperature prediction values,

obtain a plurality of second weight information based on the different second future time points included in the second future time interval and the second error information, and

obtain the second average predicted temperature corresponding to the second neural network model and the second average predicted time point by applying the second weight information to the different second future time points and the plurality of second temperature prediction values.

8. The apparatus as claimed in claim 5, wherein, by executing the at least one instruction, the at least one processor is configured to:
obtain the temperature prediction values respectively corresponding to the plurality of future time points included in each of the plurality of future time intervals by inputting plurality of context information related to an operation of the electronic apparatus into the plurality of neural network models.

9. The apparatus as claimed in claim 1, wherein, by executing the at least one instruction, the at least one processor is configured to:

perform the temperature control according to a first control logic based on the average predicted time point being less than a first threshold value and the average predicted temperature being less than a second threshold value, and
perform the temperature control according to a second control logic based on the average predicted time point being greater than or equal to the first threshold value and the average predicted temperature being greater than or equal to the second threshold value.

10. The apparatus as claimed in claim 1, wherein the electronic apparatus includes at least one of a refrigeration device, a freezer device, or an air conditioning device operating based on a predetermined temperature control cycle.

11. A control method for an electronic apparatus, the method comprising:

obtaining a temperature prediction value corresponding to each of a plurality of future time intervals based on a current time point,
obtaining weight information corresponding to the each future time interval based on error information between the obtained temperature prediction value and an actual temperature value,
obtaining an average predicted time point corresponding to the each future time interval based on the obtained weight information,
obtaining a gain value corresponding to the each future time interval based on the obtained average predicted time point and the error information, and
performing temperature control based on an average predicted time point and an average predicted temperature corresponding to at least one future time interval, the at least one future time interval being identified based on the obtained gain value.

12. The method as claimed in claim 11, wherein the obtaining a temperature prediction value corresponding to each of a plurality of future time intervals comprise:

obtaining a temperature prediction value corresponding to each of a plurality of future time points included in a specific future time interval among the plurality of future time intervals,
wherein the obtaining weight information corresponding to the each future time interval comprises:

obtaining weight information corresponding to each of the plurality of future time points based on the error information between the obtained temperature prediction value and the actual temperature value,
wherein the obtaining an average predicted time point corresponding to the each future time interval comprises:

identifying an average predicted time point corresponding to the specific future time interval based on the obtained weight information and identifying the average predicted temperature corresponding to the average predicted time point, and
wherein the obtaining a gain value corresponding to the each future time interval comprises:
obtaining the gain value corresponding to the specific future time interval based on the obtained average predicted time point and the error information.

13. The method as claimed in claim 12, wherein the obtaining weight information corresponding to the each future time interval comprises:
obtaining the weight information that is inversely proportional to a magnitude of the error information and proportional to a magnitude of a time difference between each of the plurality of future time points and the current time point.

14. The method as claimed in claim 12, wherein the obtaining a temperature prediction value corresponding to each of a plurality of future time intervals comprise:

obtaining a first temperature prediction value corresponding to each of a plurality of first future time points included in a first future time interval based on the current time point,

obtaining a second temperature prediction value corresponding to each of a plurality of second future time points included in a second future time interval based on the current time point,

wherein the obtaining weight information corresponding to the each future time interval comprises:

obtaining first weight information corresponding to each of the plurality of first future time points based on the error information corresponding to the obtained first temperature prediction value,

obtaining second weight information corresponding to each of the plurality of second future time points based on the error information corresponding to the obtained second temperature prediction value,

wherein the obtaining an average predicted time point corresponding to the each future time interval comprises:

identifying a first average predicted time point based on the obtained first weight information and identifying a first average predicted temperature corresponding to the first average predicted time point,

identifying a second average predicted time point based on the obtained second weight information and identifying a second average predicted temperature corresponding to the second average predicted time point, and

wherein the performing temperature control comprises:

performing the temperature control based on the first average predicted temperature corresponding to the first average predicted time point, or based on the second average predicted temperature corresponding to the second average predicted time point.

15. A non-transitory computer-readable medium storing computer instructions that cause an electronic apparatus to perform an operation if executed by a processor of the electronic apparatus, wherein the operation includes:

obtaining a temperature prediction value corresponding to each of a plurality of future time intervals based on a current time point,

obtaining weight information corresponding to the each future time interval based on error information between the obtained temperature prediction value and an actual temperature value,

obtaining an average predicted time point corresponding to the each future time interval based on the obtained weight information,

obtaining a gain value corresponding to the each future time interval based on the obtained average predicted time point and the error information, and

performing temperature control based on an average predicted time point and an average predicted temperature corresponding to at least one future time interval, the at least one future time interval being identified based on the obtained gain value.

# FIG. 1

# FIG. 2A

<u>100</u>

110

120

| MEMORY | AT LEAST ONE PROCESSOR |
|--------|------------------------|

# FIG. 2B

# FIG. 3

```
          ┌─────────┐
          │  START  │
          └────┬────┘
               ↓
```

OBTAIN TEMPERATURE PREDICTION VALUE CORRESPONDING TO EACH OF
PLURALITY OF FUTURE TIME INTERVALS BASED ON CURRENT TIME POINT    ~S310

OBTAIN WEIGHT INFORMATION CORRESPONDING TO EACH FUTURE TIME
INTERVAL BASED ON ERROR INFORMATION BETWEEN OBTAINED             ~S320
TEMPERATURE PREDICTION VALUE AND ACTUAL TEMPERATURE VALUE

OBTAIN AVERAGE PREDICTED TIME POINT CORRESPONDING TO EACH
FUTURE TIME INTERVAL BASED ON OBTAINED WEIGHT INFORMATION        ~S330

OBTAIN GAIN VALUE CORRESPONDING TO EACH FUTURE TIME INTERVAL
BASED ON OBTAINED AVERAGE PREDICTED TIME POINT AND ERROR         ~S340
INFORMATION

IDENTIFY AT LEAST ONE FUTURE TIME INTERVAL BASED ON OBTAINED
GAIN VALUE                                                       ~S350

PERFORM TEMPERATURE CONTROL BASED ON AVERAGE PREDICTED TIME
POINT CORRESPONDING TO IDENTIFIED AT LEAST ONE FUTURE TIME       ~S360
INTERVAL AND AVERAGE PREDICTED TEMPERATURE

```
          ┌─────────┐
          │   END   │
          └─────────┘
```

# FIG. 4

START

OBTAIN TEMPERATURE PREDICTION VALUE CORRESPONDING TO EACH OF PLURALITY OF FUTURE TIME POINTS INCLUDED IN SPECIFIC FUTURE TIME INTERVAL BASED ON CURRENT TIME POINT ~S410

OBTAIN WEIGHT INFORMATION CORRESPONDING TO EACH OF PLURALITY OF FUTURE TIME POINTS BASED ON ERROR INFORMATION BETWEEN OBTAINED TEMPERATURE PREDICTION VALUE AND ACTUAL TEMPERATURE VALUE ~S420

IDENTIFY AVERAGE PREDICTED TIME POINT CORRESPONDING TO SPECIFIC FUTURE TIME INTERVAL BASED ON OBTAINED WEIGHT INFORMATION AND AVERAGE PREDICTED TEMPERATURE CORRESPONDING TO AVERAGE PREDICTED TIME POINT ~S430

OBTAIN GAIN VALUE CORRESPONDING TO SPECIFIC FUTURE TIME INTERVAL BASED ON OBTAINED AVERAGE PREDICTED TIME POINT AND ERROR INFORMATION ~S440

END

# FIG. 5

time
t
(CURRENT TIME POINT)

$t+t_1$          $t+t_2$      ...      $t+t_n$

N FUTURE TIME POINTS

PREDICT TEMPERATURE $(T_t^{+t_1})$ AT TIME POINT $(t+t_1)$ AFTER $t_1$ ~511

CALCULATE ERROR $(E_{t_1})$ BETWEEN ACTUAL TEMPERATURE $(T_{t+t_1})$ AND PREDICTED TEMPERATURE $(T_t^{+t_1})$ ~521

PREDICT TEMPERATURE $(T_t^{+t_2})$ AT TIME POINT $(t+t_2)$ AFTER $t_2$ ~512

CALCULATE ERROR $(E_{t_2})$ BETWEEN ACTUAL TEMPERATURE $(T_{t+t_2})$ AND PREDICTED TEMPERATURE $(T_t^{+t_2})$ ~522

523

PREDICT TEMPERATURE $(T_t^{+t_n})$ AT TIME POINT $(t+t_n)$ AFTER $t_n$ ~513

CALCULATE ERROR $(E_{t_n})$ BETWEEN ACTUAL TEMPERATURE $(T_{t+t_n})$ AND PREDICTED TEMPERATURE $(T_t^{+t_n})$

PREDICT TEMPERATURE FOR EACH FUTURE TIME POINT

CALCULATE ERROR

# FIG. 6

START

SELECT M DURATIONS $(D_1 \sim D_m)$ — S610

MODEL$(D_1)$ $\cdots$ MODEL$(D_h)$ $\cdots$ MODEL$(D_m)$

CALCULATE GAIN VALUE $(G(D_1))$ — S621 $\cdots$ CALCULATE GAIN VALUE $(G(D_h))$ — S622 $\cdots$ CALCULATE GAIN VALUE $(G(D_m))$ — S623

SELECT PREDICTION VALUE OF NEURAL NETWORK MODEL HAVING LARGEST GAIN VALUE — S630

END

# FIG. 7

START

OBTAIN TEMPERATURE PREDICTION VALUES RESPECTIVELY CORRESPONDING TO PLURALITY OF FUTURE TIME POINTS INCLUDED IN EACH OF PLURALITY OF FUTURE TIME INTERVALS BY USING PLURALITY OF NEURAL NETWORK MODELS RESPECTIVELY TRAINED TO PREDICT TEMPERATURES CORRESPONDING TO PLURALITY OF FUTURE TIME INTERVALS — S710

OBTAIN WEIGHT INFORMATION CORRESPONDING TO EACH FUTURE TIME INTERVAL BASED ON ERROR INFORMATION BETWEEN OBTAINED TEMPERATURE PREDICTION VALUE AND ACTUAL TEMPERATURE VALUE — S720

OBTAIN AVERAGE PREDICTED TIME POINT CORRESPONDING TO EACH FUTURE TIME INTERVAL BASED ON OBTAINED WEIGHT INFORMATION — S730

OBTAIN GAIN VALUE CORRESPONDING TO EACH OF PLURALITY OF NEURAL NETWORK MODELS BASED ON OBTAINED AVERAGE PREDICTED TIME POINT AND ERROR INFORMATION — S740

IDENTIFY AT LEAST ONE OF PLURALITY OF NEURAL NETWORK MODELS BASED ON OBTAINED GAIN VALUE — S750

PERFORM TEMPERATURE CONTROL BASED ON AVERAGE PREDICTED TIME POINT AND AVERAGE PREDICTED TEMPERATURE BY USING IDENTIFIED NEURAL NETWORK MODEL — S760

END

# FIG. 8

| INPUT | | | |
|---|---|---|---|
| FREEZER COMPARTMENT TEMPERATURE (t-p) | ... | FREEZER COMPARTMENT TEMPERATURE (t) | |
| REFRIGERATOR COMPARTMENT TEMPERATURE (t-p) | ... | REFRIGERATOR COMPARTMENT TEMPERATURE (t) | |
| VARIABLE TEMPERATURE COMPARTMENT TEMPERATURE (t-p) | ... | VARIABLE TEMPERATURE COMPARTMENT TEMPERATURE (t) | |
| FREEZER COMPARTMENT DEFROST TEMPERATURE (t-p) | ... | FREEZER COMPARTMENT DEFROST TEMPERATURE (t) | |
| REFRIGERATOR COMPARTMENT DEFROST TEMPERATURE (t-p) | ... | REFRIGERATOR COMPARTMENT DEFROST TEMPERATURE (t) | |
| VARIABLE TEMPERATURE COMPARTMENT DEFROST TEMPERATURE (t-p) | ... | VARIABLE TEMPERATURE COMPARTMENT DEFROST TEMPERATURE (t) | |
| OUTSIDE AIR TEMPERATURE (t-p) | ... | OUTSIDE AIR TEMPERATURE (t) | |
| HUMIDITY (t-p) | ... | HUMIDITY (t) | |
| COMPRESSOR MEASURED RPM(t-p) | ... | COMPRESSOR MEASURED RPM(t) | |
| COMPRESSOR TARGET RPM(t-p) | ... | COMPRESSOR TARGET RPM(t) | |
| FREEZER COMPARTMENT FAN RPM(t-p) | ... | FREEZER COMPARTMENT FAN RPM(t) | |
| REFRIGERATOR COMPARTMENT FAN RPM(t-p) | ... | REFRIGERATOR COMPARTMENT FAN RPM(t) | |
| VARIABLE TEMPERATURE COMPARTMENT FAN RPM(t-p) | ... | VARIABLE TEMPERATURE COMPARTMENT FAN RPM(t) | |
| FREEZER COMPARTMENT VALVE (t-p) | ... | FREEZER COMPARTMENT VALVE (t) | |
| REFRIGERATOR COMPARTMENT VALVE (t-p) | ... | REFRIGERATOR COMPARTMENT VALVE (t) | |
| VARIABLE TEMPERATURE COMPARTMENT VALVE (t-p) | ... | VARIABLE TEMPERATURE COMPARTMENT VALVE (t) | |
| FREEZER COMPARTMENT TARGET TEMPERATURE (t-p) | ... | FREEZER COMPARTMENT TARGET TEMPERATURE (t) | |
| REFRIGERATOR COMPARTMENT TARGET TEMPERATURE (t-p) | ... | REFRIGERATOR COMPARTMENT TARGET TEMPERATURE (t) | |
| VARIABLE TEMPERATURE COMPARTMENT TARGET TEMPERATURE (t-p) | ... | VARIABLE TEMPERATURE COMPARTMENT TARGET TEMPERATURE (t) | |
| NUMBER OF DOOR OPENINGS (t-p) | ... | NUMBER OF DOOR OPENINGS (t) | |
| DURATION OF DOOR OPENING (t-p) | ... | DURATION OF DOOR OPENING (t) | |

INPUT LAYER    DEEP NEURAL NETWORK MULTIPLE HIDDEN LAYERS    OUTPUT LAYER

| OUTPUT |
|---|
| FREEZER COMPARTMENT TEMPERATURE $(t+t_1)$ |
| REFRIGERATOR COMPARTMENT TEMPERATURE $(t+t_1)$ |
| VARIABLE TEMPERATURE COMPARTMENT TEMPERATURE$(t+t_1)$ |
| FREEZER COMPARTMENT TEMPERATURE$(t+t_2)$ |
| REFRIGERATOR COMPARTMENT TEMPERATURE$(t+t_2)$ |
| VARIABLE TEMPERATURE COMPARTMENT TEMPERATURE$(t+t_2)$ |
| ... |
| ... |
| ... |
| ... |
| ... |
| ... |
| ... |
| ... |
| ... |
| ... |
| ... |
| FREEZER COMPARTMENT TEMPERATURE$(t+t_n)$ |
| REFRIGERATOR COMPARTMENT TEMPERATURE$(t+t_n)$ |
| VARIABLE TEMPERATURE COMPARTMENT TEMPERATURE$(t+t_n)$ |

# FIG. 9

PAST PREDICTED VALUE USED FOR ERROR CALCULATION

PAST ACTUAL VALUE USED FOR ERROR CALCULATION

EP 4 715 514 A1

# FIG. 10

START

PREDICT TEMPERATURES $(\overline{t_D}, \overline{T_D})$ —— S1010

S1020

$\overline{t_D} < t_{th1}$ ?
$\overline{T_D} < T_{th1}$ ?  —— N

Y

S1030

PERFORM TEMPERATURE CONTROL
BASED ON FIRST CONTROL LOGIC

S1040

$t_{th1} \leq \overline{t_D} < t_{th2}$
$T_{th1} \leq \overline{T_p} < T_{th2}$  —— N

Y

PERFORM TEMPERATURE CONTROL
BASED ON SECOND CONTROL LOGIC

S1050

S1060

$\overline{t_D} \geq t_{th2}$ ?
$\overline{T_D} \geq T_{th2}$ ?  —— N

Y

S1070

PERFORM TEMPERATURE CONTROL
BASED ON THIRD CONTROL LOGIC

END

# FIG. 11

<u>200</u>

210              230              220

| COMMUNICATION INTERFACE | ⟷ | AT LEAST ONE PROCESSOR | ⟷ | MEMORY |

## INTERNATIONAL SEARCH REPORT

International application No.

**PCT/IB2024/056792**

### A. CLASSIFICATION OF SUBJECT MATTER

**G05D 23/19**(2006.01)i; **G05B 13/04**(2006.01)i; **G05B 13/02**(2006.01)i

According to International Patent Classification (IPC) or to both national classification and IPC

### B. FIELDS SEARCHED

Minimum documentation searched (classification system followed by classification symbols)

G05D 23/19(2006.01); F24F 11/47(2018.01); F24F 11/52(2018.01); F24F 11/63(2018.01); F24F 5/00(2006.01); F25D 11/04(2006.01); F25D 29/00(2006.01); G05B 13/04(2006.01); G05D 23/22(2006.01); G06N 20/00(2019.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: present time, future time period, temperature prediction value, difference, weight, average prediction time, gain value, average temperature prediction

### C. DOCUMENTS CONSIDERED TO BE RELEVANT

| Category* | Citation of document, with indication, where appropriate, of the relevant passages | Relevant to claim No. |
|---|---|---|
| A | KR 10-2023-0070507 A (CHANGCHUN JETTY AUTOMOTIVE TECHNOLOGY CO., LTD.) 23 May 2023 (2023-05-23) See paragraphs [0094]-[0095]; and figure 14. | 1-15 |
| A | KR 10-2445483 B1 (NARA CONTROLS INC.) 20 September 2022 (2022-09-20) See paragraphs [0045]-[0048]; and figure 4. | 1-15 |
| A | CN 108361885 A (SHENZHEN AOTO-UNION ENERGY SAVING TECHNOLOGY CO., LTD.) 03 August 2018 (2018-08-03) See claims 1-9. | 1-15 |
| A | KR 10-2022-0106294 A (LG ELECTRONICS INC.) 29 July 2022 (2022-07-29) See paragraphs [0020]-[0112]; and figures 1-11. | 1-15 |
| A | KR 10-0630543 B1 (CHUNG HO NAIS CO., LTD.) 02 October 2006 (2006-10-02) See pages 3-7. | 1-15 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 October 2024** | **16 October 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/IB2024/056792**

| Patent document cited in search report | | | Publication date (day/month/year) | Patent family member(s) | | | Publication date (day/month/year) |
|---|---|---|---|---|---|---|---|
| KR | 10-2023-0070507 | A | 23 May 2023 | CA | 3196722 | A1 | 27 May 2022 |
| | | | | CN | 111473203 | A | 31 July 2020 |
| | | | | CN | 112416034 | A | 26 February 2021 |
| | | | | CN | 113583989 | A | 02 November 2021 |
| | | | | CN | 113583989 | B | 25 June 2024 |
| | | | | EP | 4250052 | A1 | 27 September 2023 |
| | | | | JP | 2022-080280 | A | 27 May 2022 |
| | | | | JP | 2023-549824 | A | 29 November 2023 |
| | | | | MX | 2023005789 | A | 13 July 2023 |
| | | | | US | 11619344 | B2 | 04 April 2023 |
| | | | | US | 2021-0341099 | A1 | 04 November 2021 |
| | | | | US | 2021-0344089 | A1 | 04 November 2021 |
| | | | | US | 2024-0111319 | A1 | 04 April 2024 |
| | | | | WO | 2021-218035 | A1 | 04 November 2021 |
| | | | | WO | 2021-218867 | A1 | 04 November 2021 |
| | | | | WO | 2021-219124 | A1 | 04 November 2021 |
| | | | | WO | 2022-105059 | A1 | 27 May 2022 |
| | | | | WO | 2022-105260 | A1 | 27 May 2022 |
| | | | | WO | 2022-105370 | A1 | 27 May 2022 |
| | | | | WO | 2022-105656 | A1 | 27 May 2022 |
| | | | | ZA | 202305695 | B | 27 March 2024 |
| KR | 10-2445483 | B1 | 20 September 2022 | None | | | |
| CN | 108361885 | A | 03 August 2018 | CN | 108361885 | B | 05 February 2021 |
| KR | 10-2022-0106294 | A | 29 July 2022 | None | | | |
| KR | 10-0630543 | B1 | 02 October 2006 | None | | | |

Form PCT/ISA/210 (patent family annex) (July 2022)